# EUROPEAN PATENT SPECIFICATION

(11) **EP 1 519 514 B1**
(45) Date of publication and mention of the grant of the patent: **16.04.2014**
(21) Application number: 04255891.6
(22) Date of filing: 27.09.2004
(51) Int. Cl.: H04L 12/26, H04L 12/24, H04L 29/06

(54) **Method and system for supporting multiple protocols used to monitor networked devices in a remote monitoring system**
Verfahren und System zur Unterstützung von Mehrfach-Protokollen für die Überwachung von vernetzten Geräten in einem Fernüberwachungssystem
Système et procédé pour le support de plusieurs protocoles utilisés pour surveiller les dispositifs d'un réseau d'un système de surveillance à distance

(30) Priority: 26.09.2003 US 670604
(43) Date of publication of application: 30.03.2005
(73) Proprietor: Ricoh Company, Ltd., Tokyo 143-8555 (JP)
(72) Inventor: Motoyama, Tetsuro, c/o Ricoh Corporation, Cupertino, California 95014-5924 (US)
(74) Representative: Mounteney, Simon James

(56) References cited:
- US-A- 6 008 805
- US-A1- 2003 084 176
- US-B1- 6 360 258

## Description

### FIELD OF THE INVENTION

This invention relates to the monitoring of devices connected to a network. More particularly, it relates to a method, system, and computer program product for the remote monitoring of network-connected devices using multiple protocols.

### DISCUSSION OF THE BACKGROUND

As is generally known, computer systems include hardware and software. Software includes a list of instructions that are created to operate and manage hardware components that make up a computer system. Typically, computer systems include a variety of hardware components/devices that interface with one another. The computer system can be a stand-alone type or a networked type. In a networked-type computer system, a plurality of distinct devices are connected to a network and thus communication between these distinct devices is enabled via the network.

Further, software for operating the hardware devices must be configured in order to allow communication between the hardware devices so that the hardware devices are enabled to function cooperatively. Further, in order to facilitate such a communication, it is also desirable for hardware devices to be monitored and the status of each hardware device identified in order to ensure that each hardware device is functioning in an efficient manner.

For the purposes of this patent application, the inventor has determined that a hardware device that is controlling, configuring, or monitoring the plurality of distinct devices or hardware devices would be referred to as a monitoring device and the hardware devices that are being controlled, configured, or monitored by the monitoring device would be referred to as "monitored devices."

For hardware devices that are located on a network, it is desirable for these devices to be monitored for maintenance, usage, or other purposes. However, in view of manufacturer differences relating to hardware devices and interfaces, it may be difficult for a monitoring device to communicate with various other devices connected to a network. Such a disadvantage most likely prevents network administrators from obtaining crucial information about the performance and efficiency of the devices connected to the network.

The Simple Network Management Protocol (SNMP) is today a de-facto industry standard for the monitoring and management of devices on data communication networks, telecommunication systems and other globally reachable devices. Practically every organization dealing with computers and related devices expects to be able to centrally monitor, diagnose, and configure each such device across local- and wide-area networks. SNMP is the protocol that enables this interaction.

In order for a device to respond to SNMP requests, it is desirable to equip the device with the software that enables it to properly interpret an SNMP request, perform the actions required by that request, and produce an SNMP reply. The SNMP agent software is typically a subsystem software module residing in a network entity.

The collection of objects implemented by a system is generally referred to as a Management Information Base (MIB). An MIB may also be a database with information related to the monitoring of devices. Examples of other MIB's include Ethernet MIB, which focuses on Ethernet interfaces; Bridge MIB, which defmes objects for the management of 802. ID bridges, to name a few.

Using SNMP for monitoring devices is difficult as private MIB's include values that are hard to decipher without a valid key. A company using SNMP for monitoring various devices connected to its network creates a unique identifier/key that is maintained as proprietary information of the company. For the most part, the results are displayed as binary or integer values. Thus, using SNMP, results received from the devices that are being monitored ("monitored devices") fail to provide a user with the status of the monitored devices in a user comprehensible manner.

Further, using SNMP, it is difficult for one to obtain detailed information about a monitored device without a valid key or access to a private MIB to decipher the results obtained as binary or integer values. In addition, a given protocol (e.g., SNMP or HTTP/HTML) may fail for various reasons, such as time out or lost packets. Thus, when the monitoring of a device is accomplished using multiple protocols in sequence in response to a failure, some information extracted from a given device using the multiple protocols may be duplicated for each protocol. Accordingly, if the extraction of data from the device is not properly managed in such situations, time and memory inefficiencies result since some protocols require more resources than other protocols. In addition, information extraction using some protocols may require much less processing and memory than using others. Furthermore, some information obtained through one protocol may be more useful for the monitoring device than the one obtained through another protocol.

US 2003/0084176 discloses a system for discovering devices in a video network, in which a network management system determines whether a video device in the video network supports a first network protocol. If the device supports the first protocol, the NMS automatically uses the first protocol to retrieve attributes of the device from the device, if the device does not support the first protocol, the NMS automatically determines whether the device supports a second protocol.

US 6 360 258 discloses a method for providing multiple variable retrievals and setting within one SNMP Request. The method forms packet data units with object identifiers, which are packet specific for a particular request in an object management system.

US 6 008 805 discloses a method and apparatus for managing a network access device. Embedded within the access device are three distinct software layers. A user can manage the device through an embedded text-interface generator.

### SUMMARY OF THE INVENTION

The system and method of the present invention addresses solutions to the above-identified problems by enabling monitoring of devices that are connected to a network. Accordingly, a method of monitoring a device among distinct devices communicatively coupled to a network is described.

According to a first aspect of the invention there is provided a method for monitoring the status of a device as set out in claim 1. Preferred features of this aspect are set out in claims 2 - 11.

According to a second aspect of the invention there is provided a system for monitoring the status of a device as set out in claim 12. Preferred features of this aspect are set out in claims 13 - 22.

According to a third aspect of the invention there is provided a carrier medium as set out in claim 23, and according to a fourth aspect there is provided a carrier medium as set out in claim 24. The method includes accessing a first database via a hardware access module, the first database being configured to support a plurality of communication protocols. The first database is stored with information used by the plurality of communication protocols in order to obtain various information, such as manufacturer and model information of a monitored device. A communication protocol is selected from among a plurality of communication protocols, and the selected communication protocol is configured to receive status information from the monitored device. The method further includes accessing the monitored device using the selected communication protocol and information from the first database, receiving status information from the accessed device, and storing the received status information in a second database (DeviceODBC).

In another embodiment, the present invention provides a method of monitoring a device among distinct devices communicatively coupled to a network. A plurality of communication protocols may be used to retrieve information from a monitored device. For example, an SNMP protocol is first selected to access a monitored device, and device information that is configured to be efficiently retrieved using the SNMP protocol is obtained. Subsequently, an HTTP and FTP protocols are selected to obtain information that was incapable of efficient retrieval using the SNMP protocol if the device supports the additional protocols. The selection of protocols is performed by a protocol manager in conjunction with support information stored in a database.

In the present invention, a monitoring system enables the monitoring of at least one device (monitored device) connected to a network, such as, for example, a LAN or a WAN. The monitored device is configured to have a unique IP address. The IP address allocated to the monitored device, and the details of the vendor/manufacturer for the monitored device, are stored in a database. By scanning the network and interrogating the devices the IP addresses of the devices can be obtained. Such methods are known. Therefore, it is assumed that IP addresses of the devices to be monitored are already acquired and stored in a database.

The present invention specifies how to extract necessary information from the HTML information received from a monitored device. Once a web page location of the monitored device is accessed (i.e., through the IP address and the specified port), a specific web page corresponding to the monitored device is displayed. Information in the web page is in the form of key and value pairs. For example, the toner level may be shown as "Black 100%" in the color printer web page. An HTML/XML parser is used to parse the page in order to retrieve required information from the information in the web page. The required information and parameter values extracted from the web page using the HTML/XML parser are stored in the DeviceODBC database.

In one aspect of the present invention, a method of monitoring a network connected device among distinct devices is described. The method includes accessing a first database via a hardware access module, the first database being configured to support a plurality of communication protocols. The first database is stored with information used by the plurality of communication protocols in order to determine various information, including the manufacturer and model information of a monitored device. A communication protocol is selected from among a plurality of communication protocols, the selected communication protocol being used to receive various information, including status information from the monitored device. The method further includes accessing the monitored device using the selected communication protocol and information from the first database, receiving status information from the accessed device, and storing the received status information in a second database.

The present invention also identifies various vendors of monitored devices and the device models that are supported by the monitoring system as described herein. Since various vendors of the monitored devices present information about a monitored device in a vendor-specific manner, the present invention enables the identification of the vendor and model of the monitored device to determine the operational status of the monitored device.

According to one aspect of the present invention there is provided a method, system, and computer program product for storing information configured to be used for a plurality of communication protocols to access a monitored device among distinct devices communicatively coupled to a network, comprising: (1) retrieving, from a first memory, information for accessing the device using at least one communication protocol supported by the device; (2) storing, in a second memory, the information for accessing the device retrieved from the first memory; (3) selecting a communication protocol among the plurality of communication protocols; and (4) accessing the device using the selected communication protocol and the information retrieved from the first memory and stored in the second memory.

According to another aspect of the present invention there is provided a method, system, and computer program product for storing information configured to be used for a plurality of communication protocols to extract status information related to a monitored device among distinct devices communicatively coupled to a network, comprising: (1) retrieving, from a first memory, support information for extracting the status information using the plurality of communication protocols; (2) storing, in a second memory, the information obtained from the first memory for accessing the device using the plurality of communication protocols; (3) selecting a communication protocol among the plurality of communication protocols; and (4) accessing the device using the selected communication protocol and the information stored in the second memory to extract the status information, wherein the status information is extracted using virtual interface functions associated with an abstract software class and the virtual interface functions are common to each of the plurality of communication protocols.

### BRIEF DESCRIPTION OF THE DRAWINGS

A more complete appreciation of the invention and many of the attendant advantages thereof will be readily obtained as the same becomes better understood by reference of the following detailed description when considered in connection with the accompanying drawings, wherein:
Figure 1 illustrates three networked business office devices connected to a network of computers and databases through the Internet;
Figure 2 illustrates the components of a digital image forming apparatus;
Figure 3 illustrates the electronic components of the digital image forming apparatus illustrated in Figure 2;
Figure 4 illustrates details of a multi-port communication interface illustrated in Figure 3;
Figure 5 illustrates an alternative system configuration in which business office devices are either connected directly to the network or connected to a computer which is connected to the network;
Figure 6A is a block diagram illustrating a flow of information to and from an application unit using electronic mail;
Figure 6B illustrates an alternative way of communicating using electronic mail in which a computer that is connected to the application unit also serves as a Message Transfer Agent (MTA);
Figure 6C illustrates an alternative way of communicating using electronic mail in which an application unit includes a message transfer agent for exchanging electronic mail;
Figure 6D illustrates an alternative way of communicating using electronic mail in which a mail server acts as a POP3 server to receive mail for an appliance/device and as an Simple Mail Transfer Protocol (SMTP) server to send mail for the appliance/device;
Figure 7 illustrates an alternative manner of sending messages across the Internet;
Figure 8 illustrates an exemplary computer which may be connected to an appliance/device and used to communicate electronic mail messages;
Figure 9 is a schematic representation of the overall system in accordance with an exemplary embodiment of the present invention;
Figure 10 illustrates modules used in the monitoring of the data and their interface functions in accordance with an exemplary embodiment of the present invention;
Figure 11 shows details within the Monitor module and their calling functions between the sub-modules;
Figure 12 shows a data structure used by HWaccess submodule as illustrated in Figure 11;
Figure 13 shows the sequence of the init function of the Monitor module illustrated in Figure 10;
Figure 14 shows an exemplary sequence of the status monitor function to determine the status of a monitored device by the MonitorManager, as shown in Figure 11;
Figure 15 shows a vector of the reference to the devices created by CDeviceFactory and used by the MonitorManager, as illustrated in Figure 13;
Figure 16 shows the class structure of the DeviceODBC module including the abstract class CAbsProtocolParameters;
Figure 17 illustrates the SParameter data structure used to store parameter values necessary to access monitored devices according to the present invention;
Figure 18 illustrates a map structure used to store parameter values necessary to access monitored devices according to the present invention;
Figure 19 illustrates the organization of the monitor database used in the present invention;
Figures 20-22 illustrate the organization of a support database arranged according to communication protocol according to the present invention;
Figures 23 and 24 illustrate the HWaccess class structure according to the present invention; and
Figure 25 illustrates a method for storing information configured to be used for a plurality of communication protocols to access a monitored device among distinct devices communicatively coupled to a network according to the present invention.

### DETAILED DESCRIPTION OF THE PREFERRED EMBODIMENTS

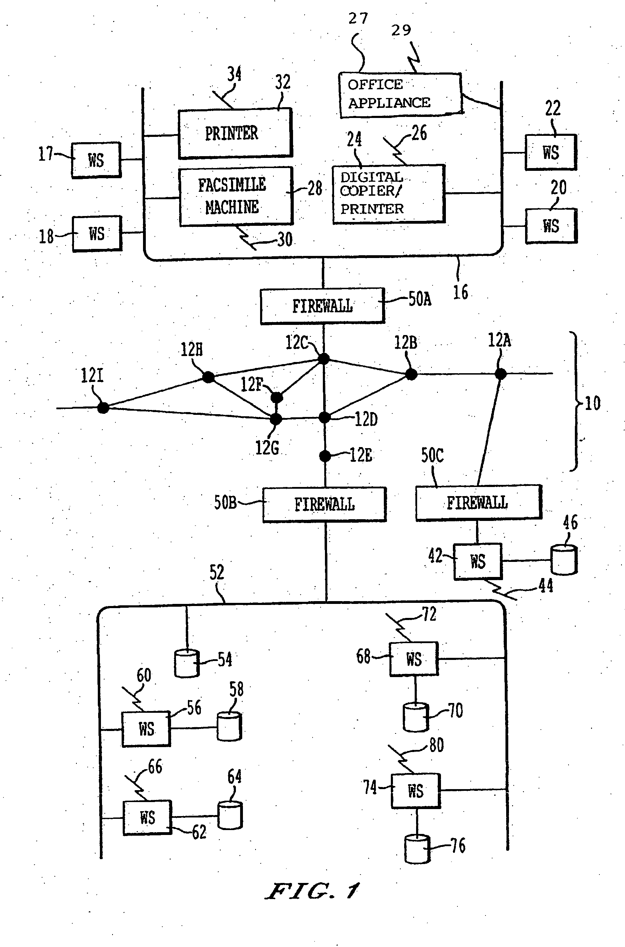

Figure 1 illustrates a schematic having various devices and computers for monitoring, diagnosing, and controlling the operation of the devices. Specifically, Figure 1 includes a first network 16, such as a Local Area Network (LAN) connected to computer workstations 17, 18, 20, and 22. The workstations can be any type of computers including, e.g., Personal Computer devices, Unix-based computers, Linux-based computers, or Apple Macintoshes. Also connected to the network 16 are a digital image-forming apparatus 24, a facsimile machine 28, and a printer 32. As would be appreciated by one of ordinary skill in the art, two or more of the components of the digital copier/printer 24 and the facsimile machine 28 can be combined into a unified "image forming apparatus." For example, the copier/printer 24, facsimile machine 28, the printer 32, and the workstations 17, 18, 20, and 22 may be referred to as machines or monitored devices. In some configurations, one or more workstations may be converted to business office appliances. In addition, any network business office appliance/device can be attached to the network 16. Also, any workstation 17, 18, 20, and 22, and office appliance 27 can function as an intermediate monitoring device to poll the monitored devices on the network 16 and to send the collected data to the monitoring device.

One example of such a business office appliance is eCabinet® from Ricoh Corporation. Also, a facsimile server (not illustrated) may be connected to the network 16 and have a telephone, cable, or wireless connection. Each of the digital copier/printer 24, facsimile machine 28, and printer 32, in addition to being connected to the network 16, may also include conventional telephone and/or cable and/or wireless connections 26, 30, and 34, respectively. As explained below, the monitored devices 24, 28, and 32, communicate with a remote monitoring, diagnosis, and control station, also referred to as a monitoring device, through, for example, the Internet via the network 16 or by a direct telephone, wireless, or cable connection.

In another exemplary business environment, monitored devices may include such devices as a multi-function imaging device, a scanner, a projector, a conferencing system, and a shredder. In another application, the network 16 may be a home network where monitored devices are meters (electricity, gas, water) or appliances such as, for example, microwave oven, washer, dryer, dishwasher, home entertainment system, refrigerator, rice cooker, heater, air condition, water heater, security camera.

In Figure 1, a wide area network (WAN) (e.g., the Internet or its successor) is generally designated by 10. The WAN 10 can be either a private WAN, a public WAN, or a hybrid type. The WAN 10 includes a plurality of interconnected computers and routers designated by 12A-12I. The manner of communicating over a WAN is known through a series of Request for Comments (RFC) documents available from the Internet Engineering Task Force (IETF) at www.ietf.org/rfc.html, including RFC 821, entitled "Simple Mail Transfer Protocol"; RFC 822, entitled "Standard for the Format of ARPA Internet Text Message"; RFC 959, entitled "File Transfer Protocol (FTP)"; RFC 2045, entitled "Multipurpose Internet Mail Extensions (MIME) Part One: Format of Internet Message Bodies"; RFC 1894, entitled "An Extensible Message Format for Delivery Status Notifications"; RFC 1939, entitled "Post Office protocol - Version 3"; RFC 2068, "Hypertext Transfer Protocol - HTTP/1.1"; and RFC 2298, entitled "An Extensible Message Format for Message Disposition Notifications."

Transmission Control Protocol/Internet Protocol (TCP/IP) related communication is described, for example, in the book "TCP/IP Illustrated," Vol. 1, The Protocols, by W.R. Stevens, from Addison-Wesley Publishing Company, 1994. Volumes 1-3 of "Internetworking with TCP/IP" by Comer and Stevens may also be referred to.

Continuing to refer to Figure 1, a firewall 50A is connected between the WAN 10 and the network 16. A firewall is a device that allows only authorized computers on one side of the firewall to access a network, computers, or individual parts on the other side of the firewall. Firewalls are known and commercially available devices and/or software (e.g., ZoneAlarm from Zone Labs). Similarly, firewalls 50B and 50C separate the WAN 10 from a network 52 and a workstation 42, respectively. Additional details on firewalls can be found in "Firewalls and Internet Security" by W. R. Cheswick, and S. M. Bellovin, 1994, AddisonWesley Publishing, and "Building Internet Firewalls" by D. B. Chapman and E. D. Zwicky, 1995, O'Reilly & Associates, Inc.

The network 52 is a conventional network and includes a plurality of workstations 56, 62, 68, and 74. These workstations may be located in a distributed fashion within different departments (e.g., sales, order processing, accounting, billing, marketing, manufacturing, design engineering, and customer service departments) within a single company. In addition to the workstations connected via the network 52, a workstation 42 that is not directly connected to the network 52 is also provided. Information in a database stored in a disk 46 connected to the workstation 42 may be shared using proper encryption and protocols over the WAN 10 to the workstations connected directly to the network 52. Also, the workstation 42 includes a direct connection to a telephone line and/or a cable network and/or a wireless network 44, and the database in disk 46 may be accessed through the telephone line, the cable network, or via the wireless network 44. The cable network used by this invention may be implemented using a cable network that is typically used to carry television programming, a cable that provides for high-speed communication of digital data typically used with computers or the like, or any other desired type of cable.

In another embodiment, the workstation 42 can be a laptop computer, a PDA, a palm top computer, or a cellular phone with network capability. These devices may be used to access information stored in the database stored in the disk 46.

Information related to digital copier/printer 24, office appliance 27, facsimile machine 28, or printer 32, respectively, may be stored in one or more of the databases stored in the disks 46, 54, 58, 64, 70, and 76. Known databases include (1) SQL databases by Microsoft, IBM, Oracle, and Sybase; (2) other relational databases; and (3) non-relational databases (including object-oriented databases from Objectivity, JYD Software Engineering, and Orient Technologies). Each of the sales, order processing, accounting, billing, customer service, marketing, manufacturing, and engineering departments may have their own database or may share one or more databases. Each of the disks used to store databases is a non-volatile memory such as a hard disk or optical disk. Alternatively, the databases may be stored in any storage device including solid state and/or semiconductor memory devices. For example, disk 64 may be stored with a marketing database, disk 58 may be stored with a manufacturing database, disk 70 may be stored with an engineering database, and disk 76 may be stored with a customer service database. Alternatively, the disks 54 and 46 may be stored with one or more of the databases.

In addition to the workstations 56, 62, 68, 74, and 42 being connected to the WAN 10, these workstations may also include a connection to a telephone line, cable, or wireless networks for providing a secure connection to a machine/device being monitored, diagnosed, and/or controlled. Additionally, if one of the communication media is not operating properly, one of the others may be automatically used, as a backup, for communication.

A feature of the present invention is the use of a "store-and-forward" mode of communication (e.g., Internet electronic mail, also referred to herein as e-mail) or transmission between a machine and a computer/monitoring system for diagnosing and controlling the machine. Alternatively, the message which is transmitted may be implemented using a mode of communication that makes direct, end-to-end connections (e.g., using a socket connection to the ultimate destination) such as FTP and Hyper Text Transfer Protocol (HTTP).

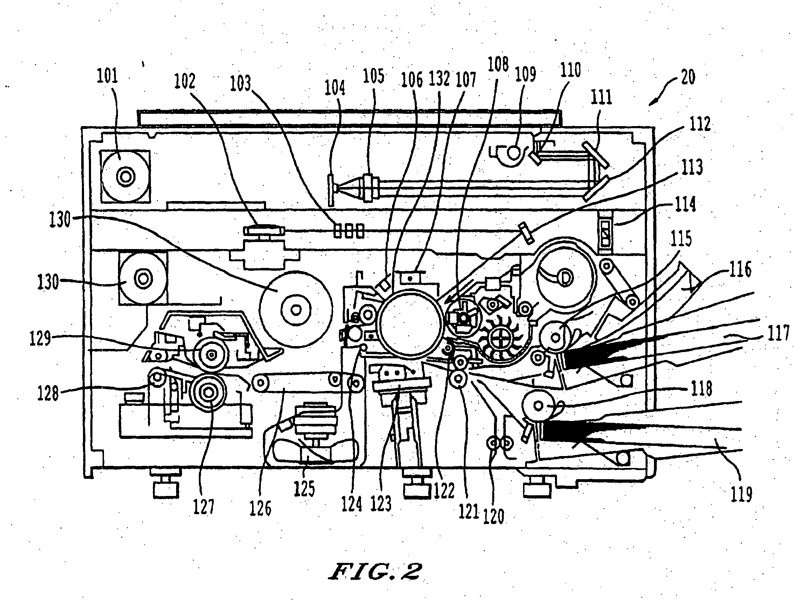

Figure 2 illustrates the mechanical layout of the digital copier/printer 24 illustrated in Figure 1. In Figure 2, 101 is a fan for the scanner, 102 is a polygonal mirror used with a laser printer, and 103 designates an F "lens used to collimate light from a laser (not illustrated). Reference numeral 104 designates a sensor for detecting light from the scanner. Reference numeral 105 designates a lens for focusing light from the scanner onto the sensor 104, and reference numeral 106 designates a quenching lamp used to erase images on the photoconductive drum 132. There is a charging corona unit 107 and a developing roller 108. Reference numeral 109 designates a lamp used to illustrate a document to be scanned and elements 110, 111, and 112 designate mirrors for reflecting light onto the sensor 104. A drum mirror 113 is provided to reflect light to the photoconductive drum 132 originating from the polygon mirror 102. A fan 114 is used to cool the charging area of the digital image forming apparatus, and a first paper feed roller 115 is used for feeding paper from the first paper cassette 117, and a reference numeral 116 designates a manual feed table. Similarly, a second feed paper feed roller 118 is used in conjunction with the second cassette 119. Reference numeral 120 designates a relay roller, 121 designates a registration roller, 122 designates an image density sensor, and 123 designates a transfer/separation corona unit. Reference numeral 124 designates a cleaning unit, 125 designates a vacuum fan, 126 designates a transport belt, 127 designates a pressure roller; and 128 designates an exit roller. A hot roller 129 is used to fix toner onto the paper, 130 designates an exhaust fan, and a main motor 131 is used to drive the digital copier/printer 24.

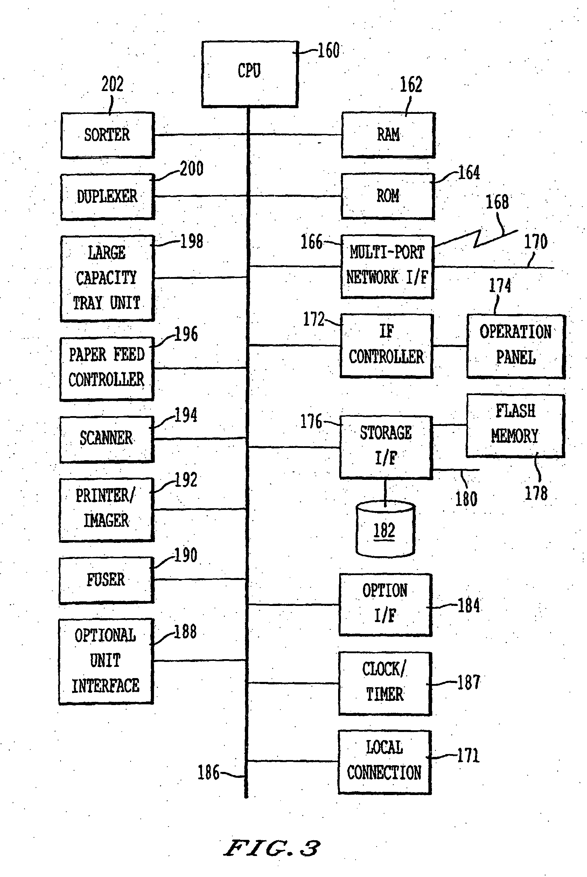

Figure 3 is a block diagram illustrating the electronic components of the digital copier/printer 24 of Figure 2, wherein CPU 160 is a microprocessor that acts as a controller of the apparatus. Random access memory (RAM) 162 stores dynamically changing information including operating parameters of the digital copier/printer 24. A non-volatile memory (e.g., a read only memory (ROM) 164 or a Flash Memory) stores program code used to run the digital image forming apparatus as well as static-state data, describing the copier/printer 24 (e.g., the model name, model number, serial number of the device, and default parameters).

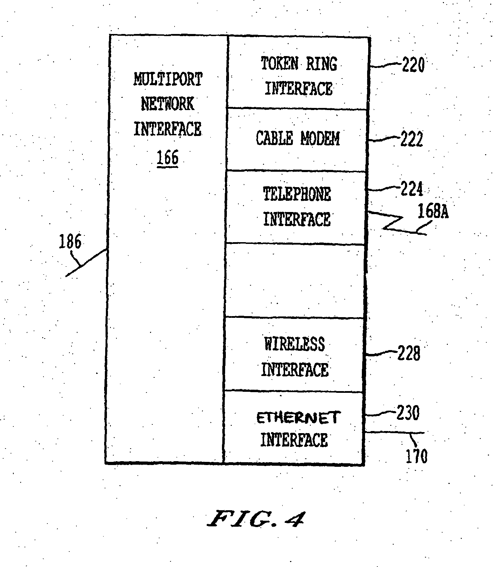

A multi-port network interface 166 is provided to enable the digital copier/printer 24 to communicate with external devices through at least one communication network. Reference number 168 represents a telephone, wireless or cable line, and numeral 170 represents another type of network different from the network identified at 168. Additional details of the multi-port network interface are set forth with respect to Figure 4. An interface controller 172 is used to connect an operation panel 174 to a system bus 186. The operation panel 174 includes standard input and output devices found on a digital copier/printer 24 including a copy button, keys to control the operation of the image forming apparatus such as, for example, number of copies, reduction/enlargement, darkness/lightness, etc. Additionally, a liquid crystal display may be included within the operation panel 174 to display parameters and messages of the digital copier/printer 24 to a user.

A local connection interface 171 is a connection through local ports such as RS232, the parallel printer port, USB, and IEEE 1394. FireWire (IEEE 1394) is described in Wickelgren, I., "The Facts About "FireWire", IEEE Spectrum, April 1997, Vol. 34, Number 4, pp. 19-25. Preferably, a "reliable" communication protocol is used which includes error detection and retransmission.

A storage interface 176 connects storage devices to the system bus 186. For example, the storage devices include a flash memory 178, which can be substituted by a conventional Electrically Erasable Programmable Read Only Memory (EEPROM), and a disk 182. The disk 182 may be a hard disk, optical disk, and/or a floppy disk drive. Additional memory devices may be connected to the digital copier/printer 24 via connection 180. The flash memory 178 is used to store semi-static state data that describes parameters of the digital copier/printer 24 that infrequently change over the life of the apparatus 24. Such parameters include, for example, the options and configuration of the digital image forming apparatus. An option interface 184 allows additional hardware, such as an external interface, to be connected to the digital copier/printer 24. A clock/timer 187 is utilized to keep track of both the time and date and also to measure elapsed time.

Figure 3 also illustrates the various sections making up the digital copier/printer 24. Reference numeral 202 designates a sorter and contains sensors and actuators that are used to sort the output of the digital copier/printer 24. A duplexer 200 allows performance of a duplex operation. The duplexer 200 includes conventional sensors and actuators. A large capacity tray unit 198 is provided for allowing paper trays holding a large number of sheets. As with the duplexer 200, the tray unit 198 includes conventional sensors and actuators as well.

A paper feed controller 196 is used to control the operation of feeding paper into and through the digital image forming device. A scanner 194 is used to scan images into the digital image forming device and includes conventional scanning elements such as a light, mirror, etc. Additionally, scanner sensors are used such as a home position sensor to determine that the scanner is in the home position, and a lamp thermistor is used to ensure proper operation of the scanning lamp. A printer/imager 192 prints the output of the digital image forming device, and includes a conventional laser printing mechanism, a toner sensor, and an image density sensor. The fuser 190 is used to fuse the toner onto the page using a high temperature roller and includes an exit sensor, a thermistor to assure that the fuser 190 is not overheating, and an oil sensor. Additionally, there is an optional unit interface 188 used to connect to optional elements of the digital image forming device such as an automatic document feeder, a different type of sorter/collator, or other elements which can be added to the digital image forming device. Other elements include a GPS unit that can identify the location of the device.

Figure 4 illustrates details of the multi-port network interface 166. The digital image forming device may communicate to external devices through a token ring interface 220, a cable modem unit 222, which has a high speed connection over cable, a conventional telephone interface 224, which connects to a telephone line 168A, a wireless interface 228, or an Ethernet interface 230, which connects to a LAN 170. Other interfaces may include, but are not limited to, a Digital Subscriber Line (DSL) (original DSL, concentric DSL, and asymmetric DSL). A single device which connects to both a Local Area Network and a telephone line is commercially available from Intel and is known as Intel Pro 10/100+Modem.

The CPU or other microprocessor or circuitry executes a monitoring process to monitor the state of each of the sensors of the digital image forming device, and a sequencing process is used to execute the instructions of the code used to control and operate the digital image forming device. Additionally, there is (1) a central system control process executed to control the overall operation of the digital image forming device, and (2) a communication process used to assure reliable communication to external devices connected to the digital image forming device. The system control process monitors and controls data storage in a static state memory (e.g., the ROM 164 of Figure 3), a semi-static memory (e.g., the flash memory 178 or disk 182), or the dynamic state memory (e.g., a volatile or non-volatile memory (e.g., the RAM 162, the flash memory 178, or disk 182). Additionally, the static state memory may be a device other than the ROM 164 such as a non-volatile memory including either of the flash memory 178 or disk 182.

The above details have been described with respect to a digital image forming device, but the present invention is equally applicable to other business office machines or devices such as an analog copier, a facsimile machine, a scanner, a printer, a facsimile server, projector, conferencing equipment, shredder, or other business office machines, a business office appliance, or other appliances (e.g., a microwave oven, VCR, DVD, digital camera, cellular phone, palm top computer). Additionally, the present invention includes other types of devices that operate using store-and-forward or direct connection-based communication. Such devices include metering systems (including gas, water, or electricity metering systems), vending machines, or any mechanical device (e.g., automobiles, washer, dryer) that needs to be monitored during operation or remote diagnosis. In addition to monitoring special purpose machines and computers, the invention can be used to monitor, control, and diagnose a general purpose computer that would be the monitored and/or controlled device.

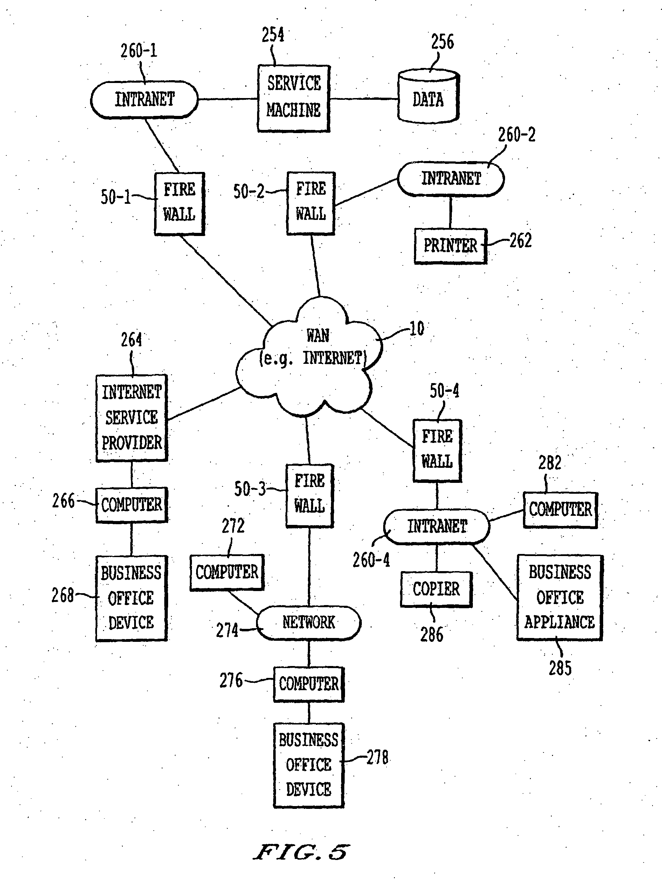

Figure 5 illustrates an alternative system diagram of the present invention in which different devices and subsystems are connected to the WAN 10. However, there is no requirement to have each of these devices or subsystems as part of the invention. Each component or subsystem illustrated in Figure 5 is individually part of the invention. Further, the elements illustrated in Figure 1 may be connected to the WAN 10 which is illustrated in Figure 5. In Figure 5, there is illustrated a firewall 50-1 connected to an intranet 260-1. A service machine 254 connected to the intranet 260-1 includes therein, or has connected thereto, data 256 that may be stored in a database format. The data 256 includes history, performance, malfunction, and any other information such as statistical information of the operation or failure or set-up of the monitored devices, or configuration information such as which components or optional equipment is included with the monitored devices. The service machine 254 may be implemented as the device or computer that requests the monitored devices to transmit data, or that requests that remote control and/or diagnostic tests be performed on the monitored devices. The service machine 254 may be implemented as any type of device, and is preferably implemented using a computerized device such as a general purpose computer. Also, Service Machine 254 may consist of multiple computers over the network with diverse database including billing, accounting, service processing, parts tracking and reports.

Another sub-system of Figure 5 includes a firewall 50-2, an intranet 260-2, and a printer 262 connected thereto. In this sub-system, the functions of sending and receiving electronic messages by the printer 262 (and similarly by a copier 286) are performed by (1) circuitry, (2) a microprocessor, or (3) any other type of hardware contained within or mounted to the printer 262 (i.e., without using a separate general purpose computer).

An alternate type of sub-system includes the use of an Internet Service Provider 264, which may be any type of Internet Service Provider (ISP), including known commercial companies such as America Online, Earthlink, and Niftyserve. In this sub-system, a computer 266 is connected to the ISP 264 through a digital or analog modem (e.g., a telephone line modem, a cable modem, modems which use any type of wires such as modems used over an Asymmetric Digital Subscriber Line (ADSL), modems that use frame relay communication, wireless modems such as a radio frequency modem, a fiber optic modem, or a device that uses infrared light waves). Further, a business office device 268 is connected to the computer 266. As an alternative to the business office device 268 (or any other device illustrated in Figure 5), a different type of machine may be monitored or controlled such as a digital copier, any type of appliance, security system, or utility meter, such as an electrical, water, or gas utility meter, or any other device discussed herein.

Also illustrated in Figure 5 is a firewall 50-3 connected to a network 274. The network 274 may be implemented as any type of computer network, (e.g., an Ethernet or token ring network). Networking software that may be used to control the network includes any desired networking software including software commercially available from Novell or Microsoft. The network 274 may be implemented as an intranet, if desired. A computer 272 connected to the network 274 may be used to obtain information from a business office device 278 and generate reports such as reports showing problems that occurred in various machines connected to the network, and a monthly usage report of the devices connected to the network 274. In this embodiment, a computer 276 is connected between the business office device 278 and the network 274. This computer receives communications from the network and forwards the appropriate commands or data, or any other information, to the business office device 278.

Communication between the business office device 278 and the computer 276 may be accomplished using wire-based or wireless methods including, but not limited to, radio frequency connections, electrical connections, and light connections (e.g., an infrared connection, or a fiber optics connection). Similarly, each of the various networks and intranets illustrated in Figure 5 may be established using any desired manner including through the establishment of wireless networks such as radio frequency networks. The wireless communication described herein may be established using spread spectrum techniques including techniques which use a spreading code and frequency hopping techniques such as the frequency hopping wireless technique disclosed in the Bluetooth Specification (available at the World Wide Web site www.bluetooth.com).

Another sub-system illustrated in Figure 5 includes a firewall 50-4, an intranet 260-4, a computer 282 connected thereto, a business office appliance 285 and a copier 286. The computer 282 may be used to generate reports and request diagnostic or control procedures. These diagnostic and control procedures may be performed with respect to the business office appliance 285 and the copier 286 or any of the other devices illustrated in or used with Figure 5. While Figure 5 illustrates a plurality of firewalls, the firewalls are preferable, but optional equipment, and therefore, the invention may be operated without the use of firewalls, if desired. For the monitoring and controlling of the networked equipment, any computers (266, 272, or 282) can be used instead of 254. In addition, any computer may access 254 to retrieve necessary device information or usage information through the web.

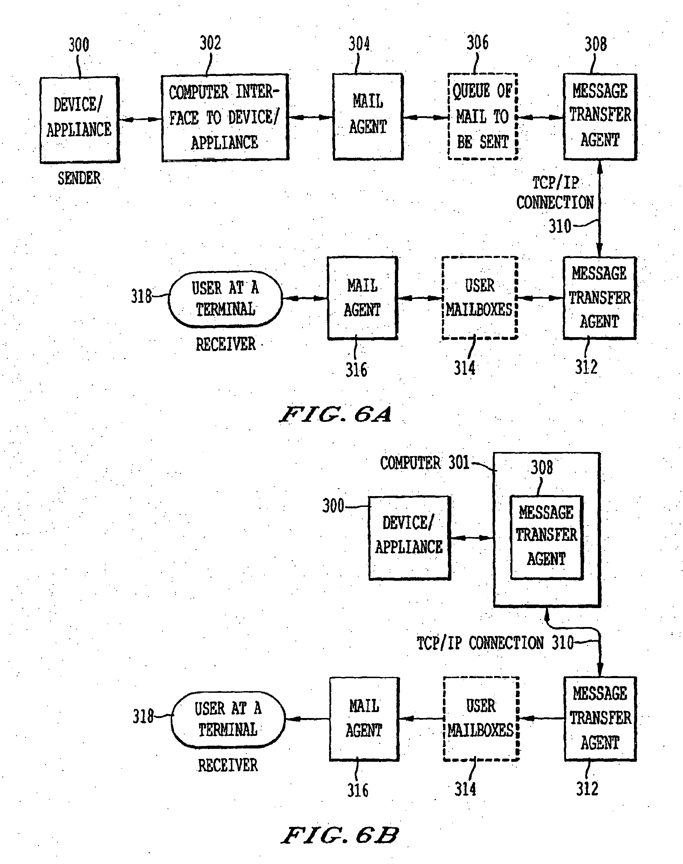

Figure 6A illustrates a device/appliance 300 connected to a typical e-mail exchange system, which includes components 302, 304, 306, 308, 310, 312, 314, 316, and 318, which may be implemented in a conventional manner, and are adapted from Figure 28.1 of Stevens, above. A computer interface 302 interfaces with any of the application units or devices/appliances 300 described herein. While Figure 6A illustrates that the device/appliance 300 is the sender, the sending and receiving functions may be reversed in Figure 6A. Furthermore, if desired, the user may not need to interface with the device/appliance 300 at all. The computer interface 302 then interacts with a mail agent 304. Popular mail agents for Unix include MH, Berkeley Mail, Elm, and Mush. Mail agents for the Windows family of operating systems include Microsoft Outlook and Microsoft Outlook Express. At the request of the computer interface 302, the mail agent 304 creates e-mail messages to be sent and, if desired, places these messages to be sent in a queue 306. The mail to be sent is forwarded to a Message Transfer Agent (MTA) 308. A common MTA for Unix systems is Sendmail. Typically, the message transfer agents 308 and 312 exchange communications using a TCP/IP connection 310. Notably, the communication between the message transfer agents 308 and 312 may occur over any size network (e.g., WAN or LAN). Further, the message transfer agents 308 and 312 may use any communication protocol. In one embodiment the present invention, elements 302 and 304 of Figure 6A reside in the library to monitor the usage of the application unit.

From the message transfer agent 312, e-mail messages are stored in user mailboxes 314, which are transferred to the mail agent 316 and ultimately transmitted to the user at a terminal 318 which functions as a receiving terminal.

This "store-and-forward" process relieves the sending mail agent 304 from having to wait until a direct connection is established with the mail recipient. Because of network delays, the communication could require a substantial amount of time during which the application would be unresponsive. Such delays in responsiveness may generally be unacceptable to users of the application unit. By using e-mail as the store-and-forward process, retransmission attempts after failures occur automatically for a fixed period of time (e.g., three days). In an alternate embodiment, the application can avoid waiting by passing communicating requests to one or more separate threads. Those threads can then control communication with the receiving terminal 318 while the application begins responding to the user interface again. In yet another embodiment in which a user wishes to have communication completed before continuing, direct communication with the receiving terminal is used. Such direct communication can utilize any protocol not blocked by a firewall between the sending and receiving terminals. Examples of such protocols include Telnet, File Transfer Protocol (FTP), and Hyper Text Transfer Protocol (HTTP).

Public WANs, such as the Internet, are generally not considered to be secure. Therefore, if it is desired to keep messages confidential, messages transmitted over the public WANs (and multi-company private WANs) can be encrypted. Encryption mechanisms are known and commercially available and may be used with the present invention. For example, a C++ library function, crypt(), is available from Sun Microsystems for use with the Unix operating system. Encryption and decryption software packages are known and commercially available and may also be used with this invention. One such package is PGP available from PGP Corporation.

As an alternative to the general structure of Figure 6A, a single computer that functions as the computer interface 302, the mail agent 304, the mail queue 306, and the message transfer agent 308 may be used. As illustrated in Figure 6B, the device/appliance 300 is connected to a computer 301, which includes the message transfer agent 308.

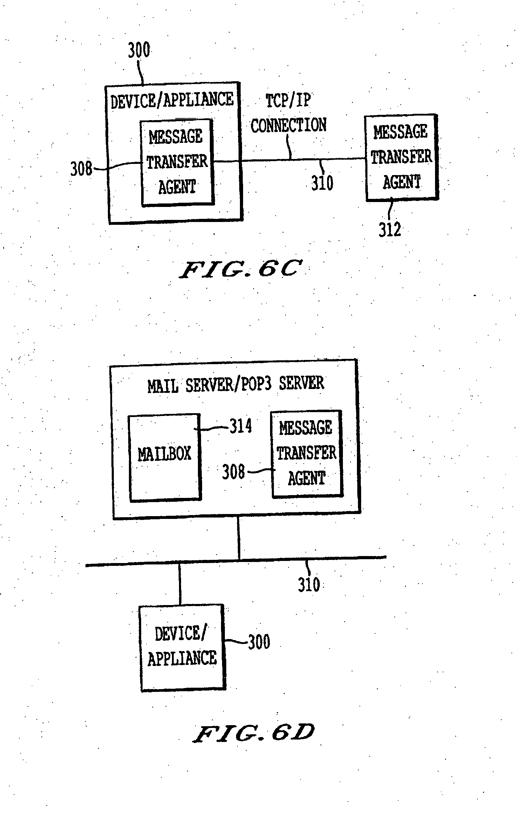

A further alternative structure is shown in Figure 6C in which the message transfer agent 308 is formed as part of the device/appliance 300. Further, the message transfer agent 308 is connected to the message transfer agent 312 by a TCP/IP connection 310. In the embodiment of Figure 6C, the device/appliance 300 is directly connected to the TCP/IP connection 310 with an e-mail capability. One use of the embodiment of Figure 6C includes using a facsimile machine with an e-mail capability (e.g., as defined in RFC 2305 (a simple mode of facsimile using Internet mail)) as the device/appliance 300.

Figure 6D illustrates a system in which a device/appliance 300 does not by itself have the capability to directly receive e-mail, but has a connection 310 to a mail server/POP3 server including a message transfer agent 308 and a mail box 314 so that the device/appliance 300 uses the POP3 protocol to retrieve received mail from the mail server.

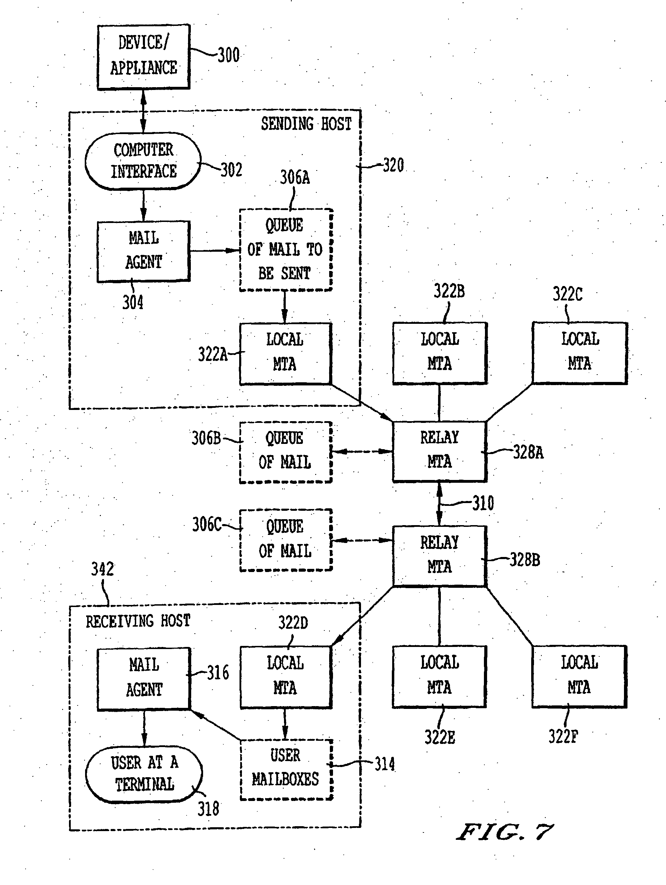

Figure 7 illustrates an alternative implementation of transferring mail and is adapted from Figure 28.3 of Stevens referenced previously. Figure 7 illustrates an electronic mail system having a relay system at each end. The arrangement of Figure 7 allows one system at an organization to act as a mail hub. In Figure 7, there are four MTAs connected between the two mail agents 304 and 316. These MTAs include local MTA 322A, relay MTA 328A, relay MTA 328B, and local MTA 322D. The most common protocol used for mail messages is SMTP (Simple Mail Transfer Protocol) which may be used with this invention, although any desired mail protocol may be utilized. In Figure 7, 320 designates a sending host which includes the computer interface 302, the mail agent 304, and the local MTA 322A. The device/appliance 300 is connected to, or alternatively included within, the sending host 320. As another case, the device/appliance 300 and host 320 can be in one machine where the host capability is built into the device/appliance 300. Other local MTAs 322B, 322C, 322E, and 322F may also be included. Mail to be transmitted and received may be queued in a queue of mail 306B of the relay MTA 328A. The messages are transferred across the TCP/IP connection 310 (e.g., an Internet connection or a connection across any other type of network).

The transmitted messages are received by the relay MTA 328B and if desired, stored in a queue of mail 306C. The mail is then forwarded to the local MTA 322D of a receiving host 342. The mail may be placed in one or more of the user mailboxes 314 and subsequently forwarded to the mail agent 316, and finally forwarded to the user at a terminal 318. If desired, the mail may be directly forwarded to the terminal without user interaction.

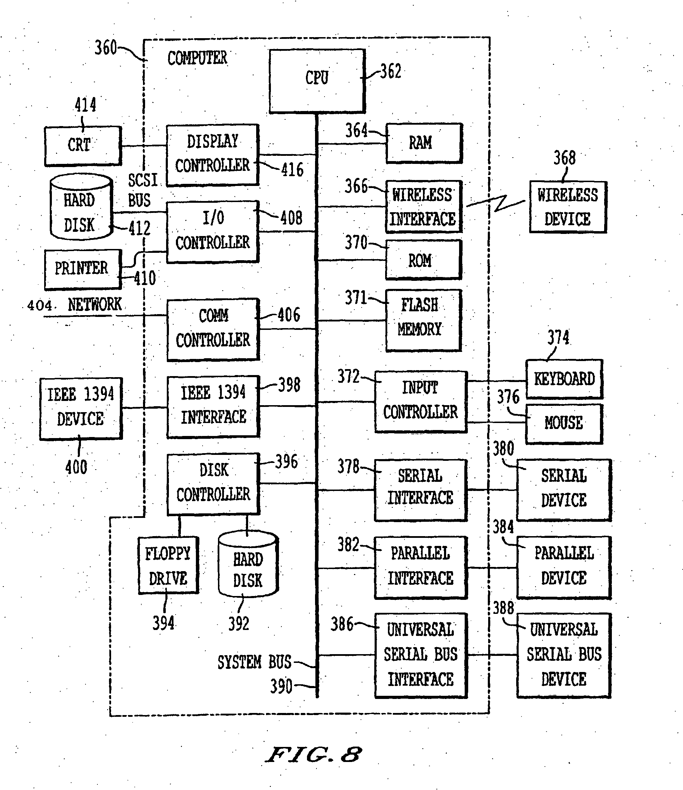

The various computers used in the present invention, including the computers 266 and 276 of Figure 5, may be implemented as illustrated in Figure 8. Further, any other computer used in this invention may be implemented in a similar manner to the computer illustrated in Figure 8, if desired, including the service machine 254, computer 272, and computer 282 of Figure 5. However, not every element illustrated in Figure 8 is required in each of those computers.

In Figure 8, the computer 360 includes a CPU 362 which may be implemented as any type of processor including commercially available microprocessors from companies such as Intel, AMD, Motorola, Hitachi and NEC. There is a working memory such as a RAM 364, and a wireless interface 366 that communicates with a wireless device 368. The communication between the interface 366 and device 368 may use any wireless medium (e.g., radio waves or light waves). The radio waves may be implemented using a spread spectrum technique such as Code Division Multiple Access (CDMA) communication or using a frequency hopping technique such as that disclosed in the Bluetooth specification.

Computer 360 includes a ROM 370 and a flash memory 371, although any other type of non-volatile memory (e.g., Erasable Programmable ROM, or an EEPROM) may be used in addition to or in place of the flash memory 371. An input controller 372 has connected thereto a keyboard 374 and a mouse 376. There is a serial interface 378 connected to a serial device 380. Additionally, a parallel interface 382 is connected to a parallel device 384, a universal serial bus (USB) interface 386 is connected to a universal serial bus device 388, and also there is an IEEE 1394 device 400, commonly referred to as a fire wire device, connected to an IEEE 1394 interface 398. A system bus 390 connects the various elements of the computer 360. A disk controller 396 is connected to a floppy disk drive 394 and a hard disk drive 392. A communication controller 406 allows the computer 360 to communicate with other computers (e.g., by sending e-mail messages) over a network 404. An I/O (Input/Output) controller 408 is connected to a printer 410 and a hard disk 412, for example using a SCSI (Small Computer System Interface) bus. There is also a display controller 416 connected to a CRT (Cathode Ray Tube) 414, although any other type of display may be used including a liquid crystal display, a light emitting diode display, a plasma display, etc.

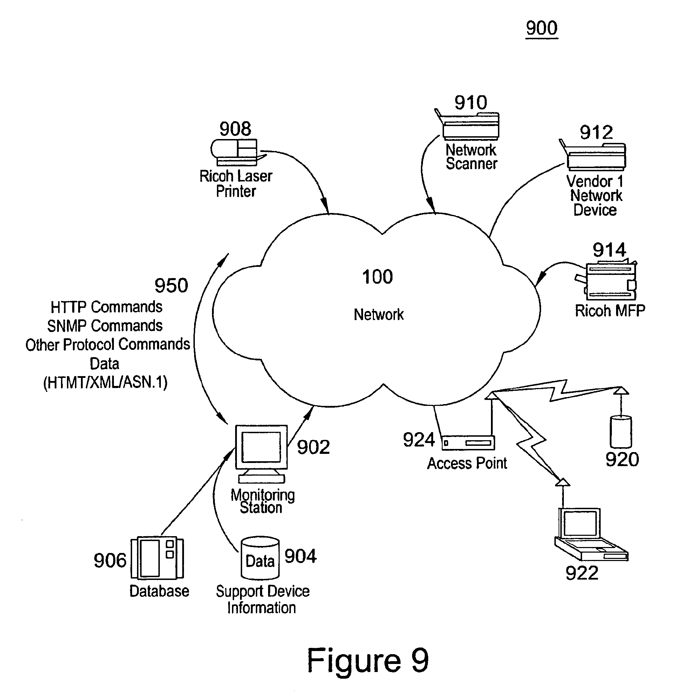

Referring now to FIG. 9, there is shown a schematic representation of the overall system 900 in accordance with an exemplary embodiment of the present invention. System 900 is shown to include a plurality of devices, for example, a laser printer 908, a scanner 910, a network device 912, and a multi-function printer 914, all connected to a network 100. These plurality of devices are generally referred to herein as "monitored devices." The system 900 also includes a workstation/monitoring system 902 (hereinafter referred to as a controller 902), connected to the network 100 for monitoring and controlling the monitored devices 908, 910, 912, and 914. Each of the monitored devices 908, 910, 912, and 914 are given a unique address. For example, an IP address assigned to a device serves as a unique address for the device. Thus, a user at controller 902 is able to access a respective device among the monitored devices 908-914 by accessing the unique IP address assigned to the respective monitored device. It will be appreciated that the present invention is not limited to using IP addresses to uniquely identify devices connected to a network.

The controller 902, upon accessing a device among the monitored devices 908-914, obtains various information through SNMP or/and HTTP protocols. Such information includes detailed information about the operational status of the device including troubleshooting information. For example, controller 902 accesses and obtains the jam location of a particular device and sends a message to the person in charge of the device to clear the jam. The operational status/details of the laser printer 908 include such details as toner level, indication of paper jam, quantity of print paper in printer trays, etc.

It will be appreciated that the controller 902 may be either physically connected or wirelessly coupled to the network 100. For example, a personal digital assistant (PDA) 920 or a laptop computer 922, shown to be wirelessly coupled to the network 100, may also be used as a controller 902. An access point 924 acts as an interface to enable wireless communications between the network 100 and PDA 922 or laptop computer 922. Henceforth, the present invention will be described with the assumption that the controller 902 will be controlling and monitoring the status of the monitored devices connected to the network.

The network 100 facilitates communication between the controller 902 and the monitored devices 908-914 to enable monitoring and control of such monitored devices. The number of devices that are connected to the network is not limiting of the present invention. It will be appreciated that the network 100 may be a local area network (LAN) or a wide area network (WAN). Likewise, the monitored devices 908, 910, 912, and 914 are shown to be merely exemplary.

The controller 902 is communicatively coupled to a storage device 904 and a database 906. The storage device 904 includes a hard disk, optical disk, and/or an external disk drive. The database 906 is communicatively linked to the storage device 904, and includes a Relational Database Management System (RDBMS) for easy search and retrieval of data stored in the storage device 904. The storage device 904 preferably stores detailed information about each of the monitored devices 908-914. For example, detailed information, such as the make, model, and various functions and trouble-shooting details of the laser printer 908 are stored in the storage device 904. Also, deviation values about the operational status of the laser printer compared to predetermined reference values may also be stored in the storage device 904. Although the database 906 and the storage device 904 are described to be communicatively coupled to the controller 902, it will be appreciated that the controller 902 may be built with the storage device and the database installed therein. In such a case, the storage device 906 and the database 904 would be depicted as being internal to the controller 902.

The controller 902 is installed with software in order to facilitate monitoring and control of the plurality, of devices 908-914. Simple Network Management Protocol (SNMP), File Transfer Protocol (FTP) and Hyper Text Transfer Protocol (HTTP) are used by the controller 902 for monitoring the plurality of devices 908-914 and the data received from the plurality of devices 908-914 is presented in the form of ASN.1 Binary format or HTML or XML formats, as shown in 950.

Although Figure 9 illustrates only the imaging devices, the network for communicating information between the monitoring device and the plurality of monitored devices may include the home network where the appliances and meters are connected to the network. It will be appreciated that data collected by the controller/workstation 902 can be sent through e-mail, FTP, or any other communication protocol means to a remote device for further processing.

### Monitoring System Architecture

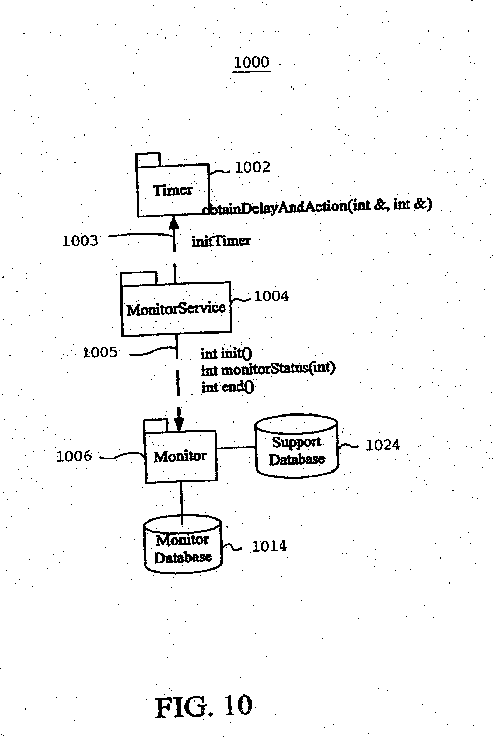

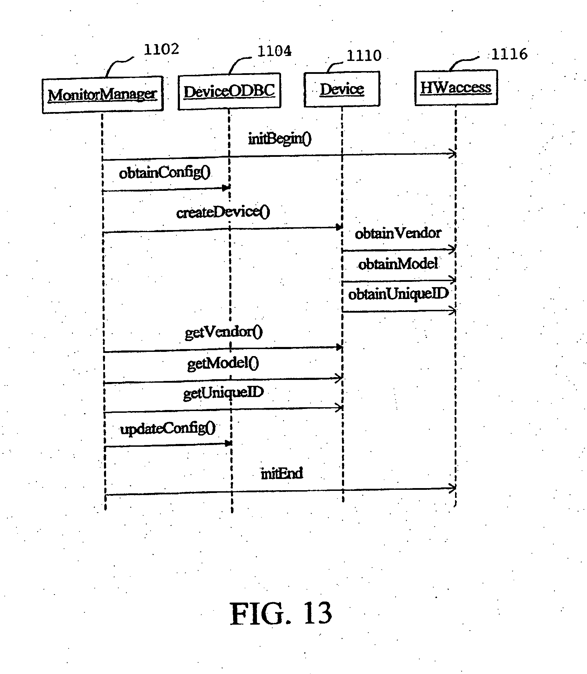

Figure 10 illustrates a monitoring system 1000 (and associated interface functions) used in the monitoring of data associated with remote devices according to an exemplary embodiment of the present invention. The monitoring system 1000 includes the software module MonitorService 1004, which is a computer resident program such as Service in NT or Windows 2000, and Daemon in Unix. In a preferred embodiment, the monitoring system is implemented using an objected-oriented software environment. Also included in the monitoring system 1000 are a Timer module 1002 and Monitor module 1006. Timer module 1002 and Monitor module 1006 are library functions to be called by the MonitorService module 1004. For example, MonitorService 1004 initializes the Timer module 1002 by calling the InitTimer 1003 function and obtains delay and action parameters by calling obtainDelayAndAction (int &, int &) function. The init() function is also called by the MonitorService module 1004 to initialize various modules in the Monitor module 1006, as illustrated in Figure 13. The init() function can be used to obtain the IP address and paramameter value assigned to a monitored device through an external source containing IP addresses, parameter names and values collected through known methods. The Monitor module 1006 is communicatively coupled to a support database 1024 and to a monitor database 1014, which are described in more detail below.

Once the IP address of a monitored device is obtained, the IP address is used by the monitoring system to contact the monitored device to obtain information such as, manufacturer (vendor) and model information. Some of the functions executed by the monitoring system 1000 include:
void initTimer(void)
   This function initializes the Timer. In particular, this function triggers the Timer object to get the timing information from the registry.
void obtainDelayAndAction(int & out_nDelay, int & out_nAction)
   This function returns the delay time in seconds for ::Sleep function (need to multiply 1000) and the action indicator. The action indicator is defined as follows: 0 = event checking; 1 = sending the monitored data; and 2 = monitoring and storing the data into the local database.
int init(void)
   This function initializes the Monitor. In addition, it creates the devices to be monitored. The return int is the error code in which zero is defined as no error.
int monitorStatus(int in_nAction)
   This function monitors the preset information. The return int is the error code in which zero is defined as no error.
int end(void)
   This function cleans up the Monitor before closing the objects. The return int is the error code in which zero is defined as no error.

### Monitor Module

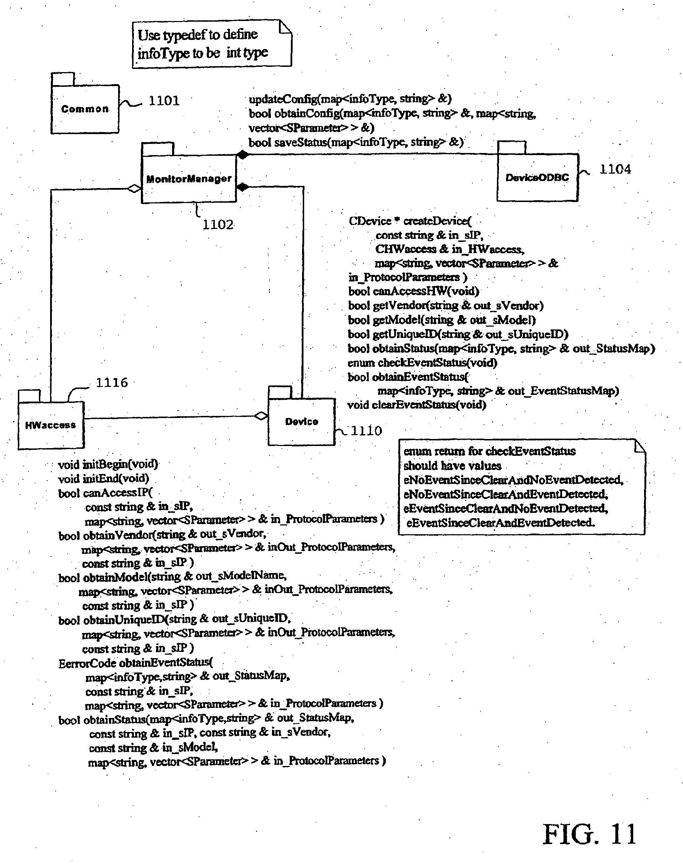

Figure 11 shows the structural details of the Monitor module 1006, including the various software sub-modules, and the calling functions between the sub-modules of the Monitor module 1006. The Monitor module 1006 includes a Common module 1101 that contains classes used by many modules, a MonitorManager module 1102 that manages the other sub-modules (including the DeviceODBC module 1104, the Device module 1110, and the HWaccess module 1116) to complete the tasks defined by interface functions as illustrated in Figure 10. Specifically, the DeviceODBC module 1104 is accessed in order to access external device information through the standard interface. The HWaccess module 1116 obtains vendor, model, unique ID, and status information from the monitored devices using a selected communication protocol from among a plurality of communication protocols (e.g., HTTP, SNMP, and FTP). Each of the Monitor software modules will be described in more detail below.

The following is a partial listing and description of the interfaces among the Monitor modules discussed above. For example, some modules may need to have "init" functions or additional functions in order to obtain the information in convenient formats.
void updateConfig(std::map<infoType, std::string> &)
   Before this function is called, the calling function is preferred not to replace the vendor and model entries if obtain functions return a null string. This function updates the device information database of the current record in the DeviceODBC 1104. This function is most efficient when the ObtainConfig below is called initially. First, this function checks if the IP address is the same at the DeviceODBC 1104. If the IP address fields are not the same, the record with the correct IP address is obtained from the database. Then, the other fields are copied and the record is updated.
bool obtainConfig(std::map<infoType, std::string> &, std::map<std::string, std::vector<SParameter>> &)
   This function obtains the map from DeviceODBC 1104 for the device information in the given format and the map of protocols and associated parameters. The function returns true if there is data returned, false if there is no more data.
bool saveStatus(std::map<infoType, std::string>&)
   This function saves the status information into the DeviceODBC 1104. The function returns true when saving is successful, false otherwise.
CDevice * createDevice(const std::string & in_sIP, CHWaccess & in_HWaccess, std::map<std::string, std::vector<SParameter>> & in_ProtocolParameters)
   This function creates the device based upon in_sIP and in_ProtocolParameters. The created device is connected to the hardware through CHWaccess. If the device can not be created, the function returns 0. Therefore, the calling object should check if the return object pointer is 0 or not.
bool canAccessHW(void)
   This function returns true when the hardware can be accessed through the network, false otherwise.
bool getVendor(std::string & out_sVendor)
   This function returns the vendor name. If the device is not supported by the system, but it can be accessed through one of the protocols, the string shall contain "GENERIC." If the error is detected in the process, the function returns false with null string. Otherwise, the function returns true.
bool getModel(std::string & out_sModel)
   This function gets the model of the device. If the model is obtained, the function returns true. If the error is detected in the process, the function returns false with null string.
bool getUniqueID(std::string & out_sUniqueID) This function returns the unique ID of the device. If the Unique ID is obtained, the function returns true. If the error is detected in the process, the function returns false with null string.
bool obtainStatus(map<infoType, std::string> & out_StatusMap)
   This function returns the status map. The function returns true when the status is returned, false when status could not be obtained. Note that this function returns the different maps from the HWaccess and Device modules. In the Device module, event status information is added to the map returned from HWaccess and is cleared.
enum checkEventStatus(void)
   This function triggers to obtain the event of the network device. The enum type and values should be defined in the classes. The enum values should include values eNoEventSinceClearAndNoEventDetected, eNoEventSinceClearAndEventDetected, eEventSinceClearAndNoEventDetected, eEventSinceClearAndEventDetected.
bool obtainEventStatus(std::map<infoType, std:: string> & out_EventStatusMap)
   This function obtains event status information. The function returns true when the status is returned, false when status could not be obtained.
void clearEventStatus(void)
   This function clears the event status accumulated since the last obtainStatus function call or clearEventStatus.
voidinitBegin(void)
   This function starts the initialization process through HWaccess, in particular, to create the software device objects.
void initEnd(void)
   This function ends the initialization process through HWaccess signifying that the device object creation is finished.
bool canAccessIP(const std::string & in_sIP, std::map<std::string, std::vector<SParameter>> & in_ProtocolParameters)
   This function returns true when the device can be accessed at the IP address, false otherwise.
bool obtainVendor(std::string & out_sVendor, std::map<std::string, std::vector<SParameter>> & inOut_ProtocolParameters, const std::string & in_sIP)
   This function obtains the Vendor. The function returns true if the operation is successful, false with the empty string otherwise. During this function call, the protocols are examined and if a particular protocol can not be used for status monitoring, the protocol shall be deleted from the inOut_ProtocolParameters.
bool obtainModel(std::string & out_sModelName, std::map<std::string, std::vector<SParameter>> & inOut_ProtocolParameters, const std::string & in_sIP)
   This function obtains the Model name. The function returns true if the operation is successful, false with the empty string otherwise. During this function call, the protocols are examined, and if a particular protocol can not be used for status monitoring, the protocol shall be deleted from the inOut_ProtocolParameters.
bool obtainUniqueID(std::string & out_sUniqueID, std::map<std::string, std::vector<SParameter>> & inOut_ProtocolParameters, const std::string & in_sIP)
   This function obtains the Unique ID. The function returns true if the operation is successful, false with the empty string otherwise. During this function call, the protocols are examined and if a particular protocol can not be used for status monitoring, the protocol shall be deleted from the inOut_ProtocolParameters.
EerrorCode obtainEventStatus(std::map<infoType, std::string> & out_StatusMap, const std::string & in_sIP, std::map<std::string, std::vector<SParameter>> & in_ProtocolParameters)
   This function obtains the event status. The EerrorCode is defined below.
bool obtainStatus(std::map<infoType, std::string> & out_StatusMap, const std::string & in_sIP, const std::string & in_sVendor, const std::string & in_sModel, std::map<std::string, std::vector<SParameter>> & in_ProtocolParameters)
   This function obtains the status of the device. The function returns true if the operation is successful, false with the empty map otherwise.

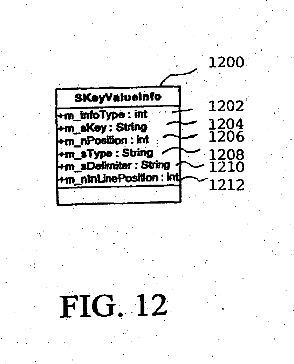

Figure 12 shows the data structure used by the HWaccess module 1116, as illustrated in Figure 11, to exchange information for retrieval of values associated with key values received by the HWaccess module 1116. For example, the SKeyValueInfo data structure, as shown in Figure 12, is used to determine how to obtain information corresponding to a particular information type (corresponding to *m_infoType* 1202) within a given web page. Typically, a multitude of vendors use vendor-specific identifiers and nomenclature to identify key information, displayed on their respective web pages, related to a monitored device. For example, to determine the number of pages printed by a printer device, Hewlett Packard uses the "Page Count" feature, while Xerox identifies the same using a "Total Sheet Delivered" feature. A feature of the present invention is to overcome the vendor-to-vendor variances and thereby provide a standardized and uniform method of identifying device-specific information and extract the value corresponding to the information by using a data structure/SKeyValueInfo structure 1200. The SKeyValueInfo data structure 1200 includes attributes that are public.

The SKeyValueInfo is typically a data structure created to identify value information from information that is received from a monitored device in the form of a data string or a key string. The SKeyValueInfo includes a plurality of fields, each field represented by information illustrated in Figure 12. The SKeyValueInfo structure 1200 includes an *m_sKey* field 1204 that represents a string key, an *m_nPosition* field 1206, which is preferably a tag-based value indicating the number of positions in the string where a value information could be located, and an *m_nInLinePosition* field 1212. For example, the Page Count of a printer device, subject to monitoring, may be found at a second position following a key word. *m_sType* 1208 represents the type of information one can retrieve from a displayed web page of a monitored device.

When the value, such as, for example, model name of the monitored device, is found within the same data line of the key (Product Name), the *m_nPosition* field is "0." *m_sDelimiter* 1210 indicates a specific delimiter used to extract the value associated with the key. The SKeyValueInfo data structure indicates how to extract the value information from information received from a monitored device in an HTML format.

Figure 13 shows the sequence of the init() function to describe the calling sequence of Monitor module 1006 as illustrated in Figure 10. The MonitorManager 1102 initializes the HWaccess module 1116 to start the initialization function. Subsequently, the MonitorManager 1102 obtains information about a monitored device and uses an IP address assigned to the monitored device to communicate with the monitored device. The MonitorManager 1102 accesses DeviceODBC 1104 to obtain configuration information of the monitored device. The configuration information returned to the MonitorManager 1102 includes, for example, an IP address of the monitored device, parameter names and associated values for each protocol, and vendor/manufacturer and model information of the monitored device. Once the IP address is obtained, the MonitorManager 1102 sets the IP address, parameter names and associated values for each protocol, to create a software object based on class structure of the Device module 1110 through the CDeviceFactory class 2001. When the device software object is successfully created, the HWaccess module 1116 is used to obtain Vendor, Model, and Unique ID from the monitored device to be stored in the created device software object.

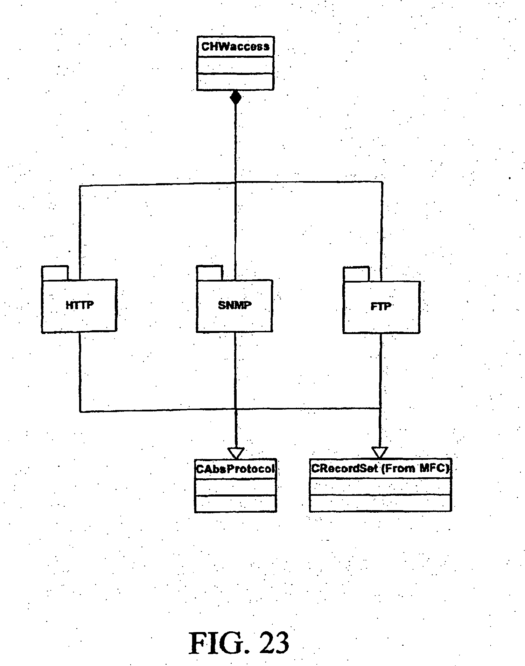

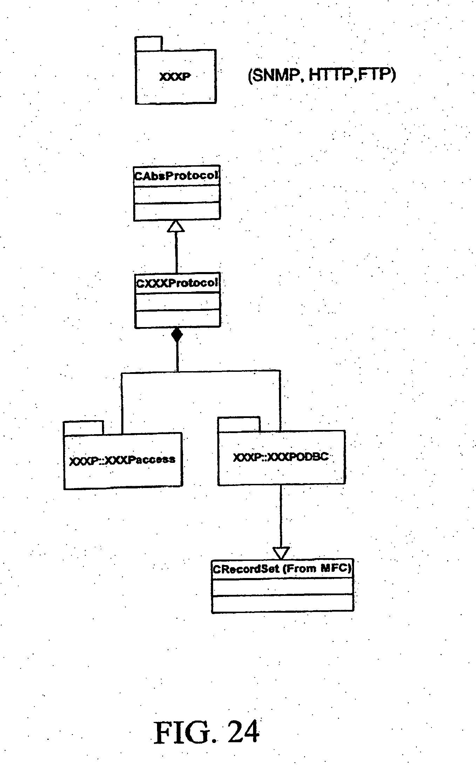

Once the vendor, model information, and unique ID are obtained from the device software object, the MonitorManager 1102 updates the database (for example, DeviceODBC 1104) with information received from the monitored device. Although Figure 13 shows one device, the steps from obtainConfig to updateConfig are repeated to cover all the devices specified in the external source. In addition, each protocol specified in Figures 23 and 24 is initialized. The database table corresponding to ODBC in the Figure 24 are accessed and necessary information for accessed devices are transferred from the external storage to the internal data structure so that the status information collection from the accessed devices is faster.

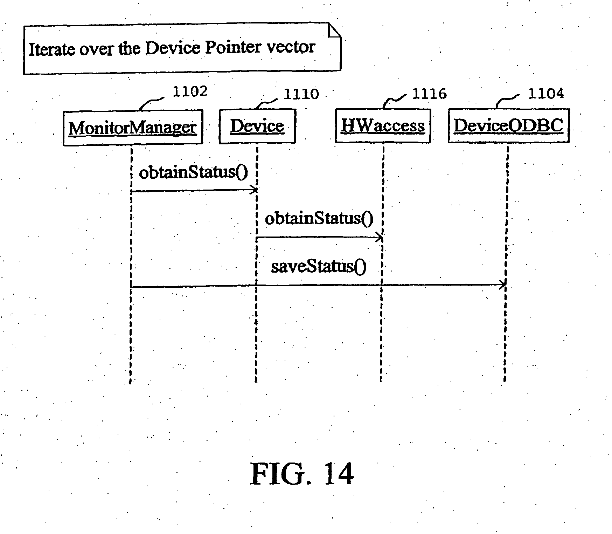

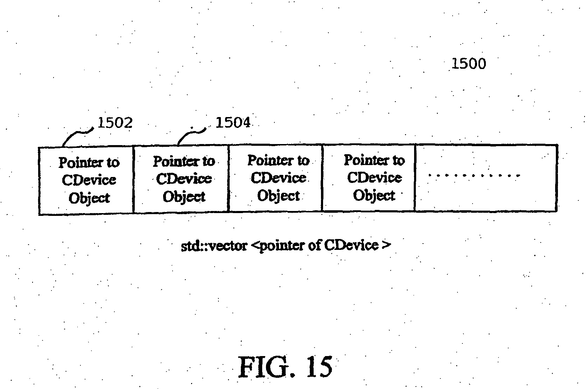

Figure 14 shows the sequence of the status monitor function to determine the status of a monitored device by the MonitorManager module 1102, as illustrated in Figure 11. When the obtainStatus function is issued from Device to HWaccess, the CHWaccess class in turn issues an obtainStatus function call to each protocol described in Figures 23 and 24 through the abstract class, with different parameters, as decribed below. Each protocol module has already cached information necessary to extract the status information from the monitored devices, which have already been accessed once during the initialization time decribed in Figure 13. Therefore, the status information can be quickly extracted from the monitored devices without accessing the external source during the status monitoring. This process is repeated over all the monitored devices stored in the vector as shown in Figure 15.

Referring to Figure 15, there is shown a vector 1500 having reference to the devices created by the CDeviceFactory 1106 and used by the MonitorManager 1102, as illustrated in Figures 13 and 14. MonitorManager 1102 stores device pointers, such as for example, Pointer to CDevice Object 1502, and Pointer to CDevice Object 1504 created by CDeviceFactory 1106, in the vector. The vector sequence is iterated to obtain the status of a monitored device. Polling of monitored devices is performed over the device object by issuing an obtainStatus command. Once the status of each of the software objects is obtained, such status is updated through the DeviceODBC 1104. The status monitor sequence was described above at Figure 14, and will not be repeated herein.

The DeviceInfo structure shown in Table I illustrates the information regarding one example monitored device. The DeviceInfo structure includes the e-mail address of the contact person, in addition to the telephone number.

**Table 1**

| Type | Name | Description |
|---|---|---|
| std::string | m_sVendor | A string representing the vendor of the network printer. |
| std::string | m_sModel | A string representing the model of the network printer. |
| std::string | m_sUniqueID | A string representing the Unique ID of the network printer. This ID may be a serial number or MAC Address or any unique ID obtainable from the network printer. |
| std::string | m_sIPAddress | A string representing the IP address of the network printer. |
| sty::string | m_sCompanyName | A string representing the name of the company which owns the network printer. |
| std::string | m_sStreet | A string representing the street address of the company. |
| std:string | m_sCity | A string representing the city where the company is located. |
| std::string | m_sState | A string representing the state where the company is located. |
| std::string | m_sZipCode | A string representing the zip code of the company. |
| std::string | m_sLocation | A string representing the location of the network printer within the company. |
| std::string | m_sContactPerson | A string representing the name of the contact person responsible for the network printer. |
| std::string | m_sPhoneNumber | A string representing the phone number of the contact person. |
| std::string | m_sEMailAddress | A string representing the e-mail address of the contact person. |

### Monitor Database

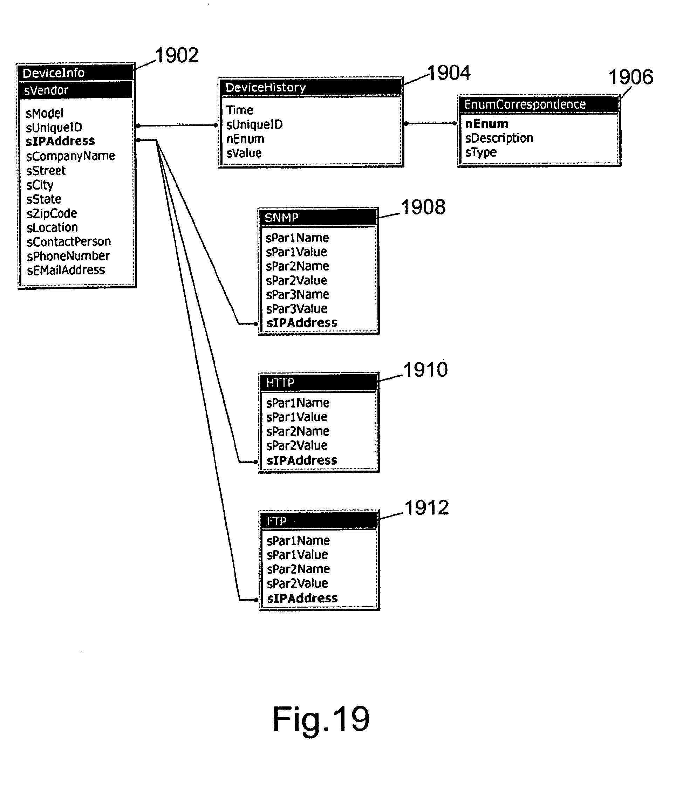

Figure 19 illustrates the organization of the monitor database, which includes the device information for each monitored device (see also Table I). As shown in Figure 19, a set of parameters, one set for each communication protocol (e.g., SNMP, HTTP, and FTP), is associated with the device information Devicelnfo 1902 for each monitored device. Moreover, each set of parameters for a particular protocol (e.g., SNMP 1908, HTTP 1910, and FTP 1912) is organized as a list of parameter name and value pairs, e.g., *sPar1Name* and *sPar1Value.* Note that the number of parameters for each protocol may be shorter or longer than the number shown in Figure 19. For example, a username and password may be stored as FTP parameters, while a community name and a password may be stored as SNMP parameters for a given monitored device. As shown in Figure 19, the monitor database also includes information related to the DeviceHistory 1904 and the EnumCorrespondence 1906.

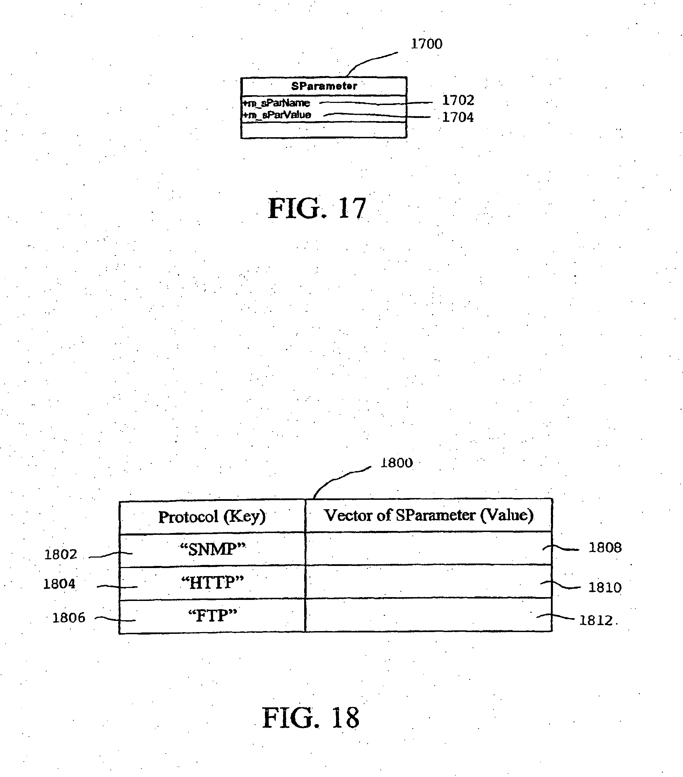

Figure 17 illustrates the SParameter data structure 1700 used to pass the parameters used by the various communication protocols. SParameter includes two fields: *m_sParName* 1702 and *m_sParValue* 1704, which represent the name and value of the parameter, respectively.

Figure 18 illustrates the map structure 1800 used to pass a vector of parameters for each protocol obtained from the monitor database to a software object associated with each monitored device. The map structure 1800 associates each protocol/key field 1802, 1804, and 1806, with a corresponding vector of parameters 1808, 1810, and 1812, respectively, arranged according to the SParameter format shown in Figure 17. For example, for the SNMP protocol 1802, the vector of parameters 1808 may include a list of parameter name, parameter value pairs that are used to access the monitored device with the SNMP protocol. For example, the SNMP parameter names stored in the vector 1808 might include "Community Name" and "Password", together with the corresponding parameter values. Note, however, that the organization of the map structure 1800 allows for any number of protocols and associated parameter vectors, and is not limited to the SNMP, HTTP, and FTP protocols shown in Figure 18.

### Support Database

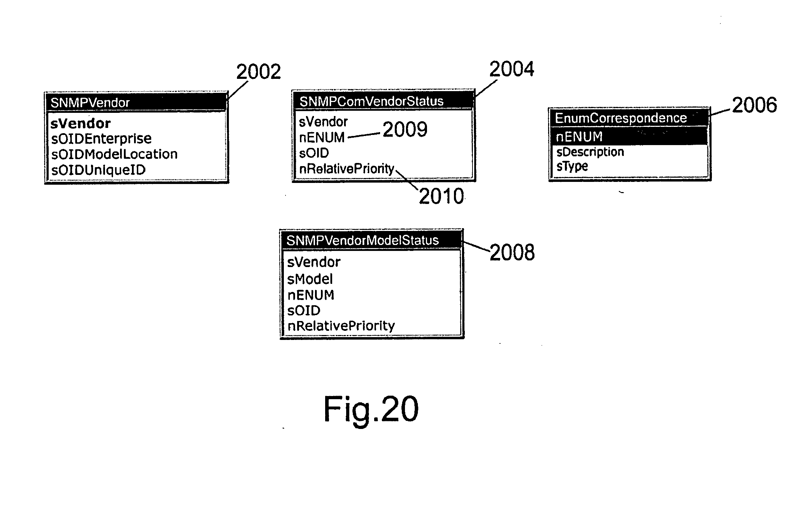

Figures 20-22 illustrate the organization of the support database 1024 shown in Figure 10. The support database, which includes information necessary to extract status information from each monitored device, is organized by communication protocol. For example, Figure 20, which illustrates the organization of the support database for SNMP-related support information used to extract information from a monitored device, includes SNMPVendor 2002, SNMPComVendorStatus 2004, EnumCorrespondence 2006, and SNMPVendorModelStatus 2008 data structures. A given data structure in the support database may include parameters that uniquely identify the type of status information to be extracted, along with parameters that control the extraction. For example, the SMNPComVendorStatus data structure 2004 include an *nENUM* field 2009, which identifies the type of information to be extracted (e.g., toner level), and an *nRelativePriority* field 2010, which indicates the weight or importance of the extracted information relative to other protocols. Thus, if the same information may be extracted from the monitored device using more than one protocol, the *nRelativePriority* value gives a relative indication of which protocol's extracted value should be used. For example, if HTTP is only able to extract information indicating whether the toner level is "high" or "low" while the SNMP protocol is able to extract the percentage level of toner remaining, the priority level for the toner level for SNMP would be higher than the corresponding value for HTTP. In addition, the support database may provide default priority values for an entire protocol. In one embodiment, the SNMP protocol is given a priority value of 10,000 in a system in which protocol values may range from 0 to 32,000.

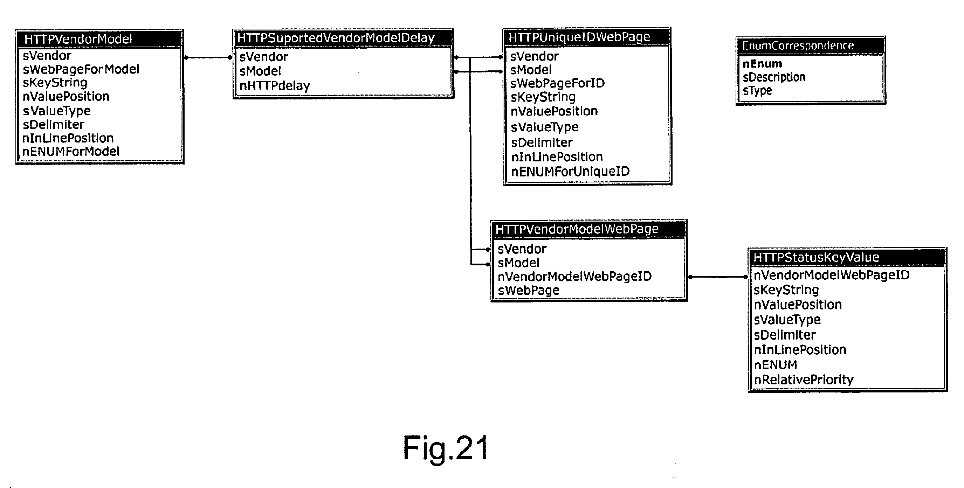

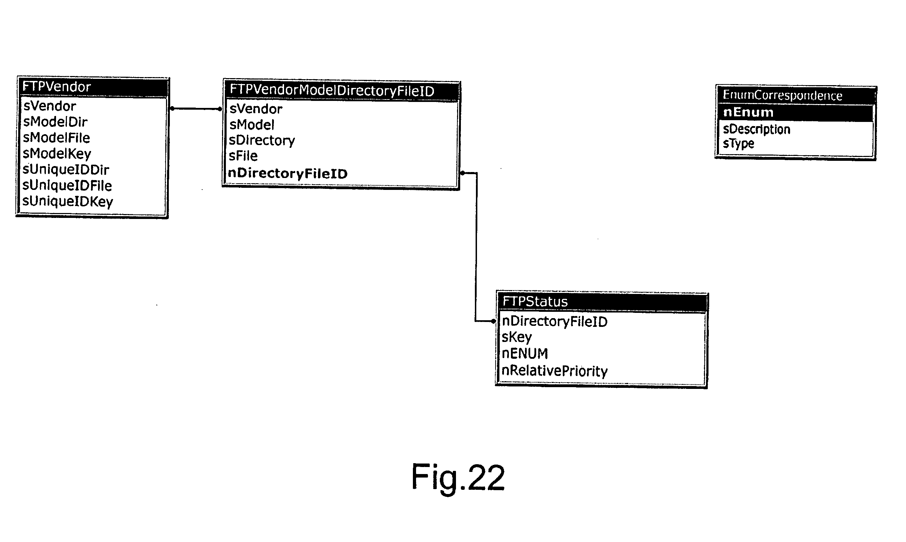

Figures 21 and 22 illustrate the data structures included in the HTTP and FTP portions of the support database 1024 and includes data structures analogous to the data structures described above with regard to Figure 20

Exemplary *enum* types used by the present invention is the infoType defined below. (The enum types are merely exemplary and therefore should not be construed as limiting the present invention.)
infoType (typedef int infoType)

This section describes the definition of the infoType (int). The value range 0 through 99 is assigned to the data type. The value range 100 to 499 is assigned to Device Information. The value range 500 to 1999 is assigned to the common parameters including standard MIB parameters. The range 2000 to 3999 is assigned to Ricoh-specific information. The range 4000 to 4999 is assigned to Xerox. The range 5000 to 5999 is assigned to Lexmark. The range 6000 to 6999 is assigned to HP. The values are defined as follows:
infoType { eNotDefine = 0, eDeviceInformation=1, eStatuslnformation=2,
   eVendor=100, eModel, eUniqueID, eIPAddress, eCompanyName, eStreet, eCity, eState, eZipCode, eLocation, eContactPerson, ePhoneNumber, eEMailAddress, eDateTime=500, eHrDeviceErrors, eLowPaper, eNoPaper, eLowToner, eNoToner, eDoorOpen, eJammed, eOffline, eServiceRequested, ePrtGeneralConfigChanges=600, ePrtLifeCount, ePrtAlertDesc1, ePrtAlertDesc2, ePrtAlertDesc3, ePrtAlertDesc4, ePrtAlertDesc5, eBlack=700, eMagenta, eCyan, eYellow, eTonerCollector=800, eBlackDeveloper=810, eColorDeveloper, eFuser=820, eDrum=830, eTransfer=840, eMaintenanceKit=850, eOilKit=860, eStationInfol=901, eStationInfo2, eStationInfo3, eStationInfo4, eStationInfo5, eRicohEngineCounterTotal=2000, eRicohEngineCounterPrinter, eRicohEngineCounterFax, eRicohEngineCounterCopier}.
EerrorCode
   The following codes are merely exemplary, and more codes may be added to the existing set. The range 0 - 99 is reserved. The range 100-199 is for SMTP, 200-299 is for POP3, 300-399 is for Socket, and 400-499 is for HTTP, and 500-599 is for FTP. Other ranges not specified may be defined by a user, if needed.
enum EerrorCode(eNoError = 0, eUnknownError = 1, eSomeError, eCompleteFailure, eSomeDeviceCreationError = 20, eCreateDeviceError, eNoDeviceCreated, eObtainConfigError, eSaveStatusError, eObtainUniqueIDError, eObtainStatusError, eStartSendError, eSomeDataSendError, eCompleteDataSendFailure, eEndSendError, eSendHeloCommandFailed = 100, eSendMailCommandFailed, eSendRcptCommandFailed, eSendDataCommandFailed, eSendDataFailed, eSendQuitCommandFailed, eSendUserCommandFailed = 200, eSendPassCommandFailed, eSendStatCommandFailed, eSendRetrCommandFailed, eSendDeleCommandFailed, eSendQuitPop3CommandFailed, eCreateSocketFailed = 300, eConnectSocketFailed, eBadRequest=400, eUnauthorized, ePaymentRequired, eForbidden, eNotFound, eMethodNotAllowed, eNotAcceptable, eProxyAuthenticationRequired, eRequestTimeOut, eConflict, eGone, eLengthRequired, ePreconditionFailed, eRequestEntityTooLarge, eRequestURITooLarge, eUnsupportedMediaType, eRequestedRangeNotSatisfiable, eExpectationFailed, eInternalServerError=450, eNotImplemented, eBadGateway, eServiceUnavailable, eGatewayTimeOut, eHTTPVersionNotSupported, eMultipleChoices=480, eMovedPermanently, eFound, eSeeOther, eNotModified, eUseProxy, eTemporaryRedirect).

### Abstract Classes in the DeviceODBC Module

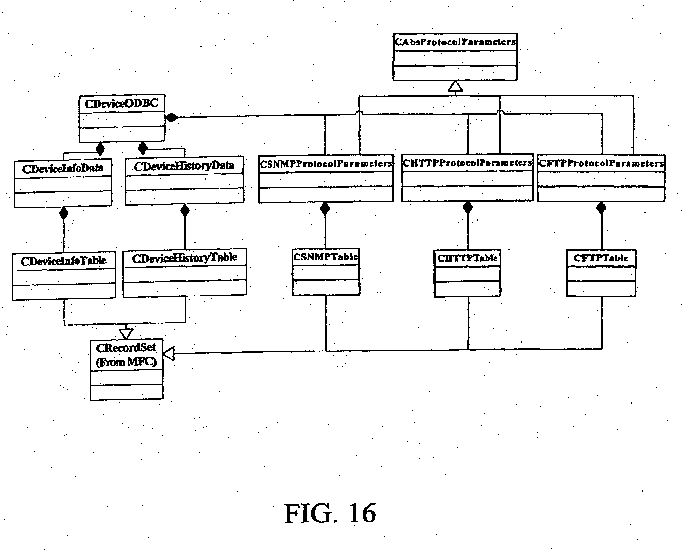

Figure 16 illustrates the DeviceODBC module class structure according to the present invention, and shows how the CAbsProtocolParameters class structure is used within the DeviceODBC module. The CAbsProtocolParameters class is designed to interface with the monitor database 1014 and to obtain information for accessing the monitored devices using a particular communication protocol. The CAbsProtocolParameters class has two virtual functions which are protocol-independent:
(1) std::string obtainProtocolName(void); and
(2) bool obtainParameterVector(std::vector<SParameter> & out_ParameterVector, const std::string in_sIP).
Using these functions, the CDeviceODBC class can handle as many protocols and their associated parameter names and values through the pointer to the CAbsProtocolParameter type, without identifying the protocol. The obtained information for each device (e.g., IP Address) is stored in the data structure of Figure 18 and passed to the MonitorManager module 1102 through the obtainConfig function. From the CDeviceODBC perspective, all the objects used to obtain the protocol name and the associated parameter names and values are considered to be a type of CAbsProtocol Parameters. When a new parameter is added, therefore, the new object should be created and stored in the vector of pointers to CAbsProtocolParameters class. The other functions do not need to be changed.

### Abstract Classes in the HWaccess Module

Figure 23 illustrates the HWaccess module class structure according to the present invention, and shows how the CAbsProtocol class structure is used within the HWaccess module. The CAbsProtocol class is designed to interface with the support database 1024 and to obtain support information for extracting status information from the monitored devices using a particular communication protocol. The CAbsProtocol class has the virtual functions described above: initBegin, initEnd, canAccessIP, obtain Vendor, obtainModel, obtainUniqueID, obtainEventStatus, and obtainStatus. However, the first parameter of the functions obtainEventStatus and obtainStatus have a different type. Instead of std::map<infoType, std::string>, the status type is std::map<infoType, std::pair<std:;string, int>>. This allows for the accommodation of *nRelativePriority*, which allows the highest priority status information to be obtained, as discussed above. For each device and each protocol, the system can check if the particular infoType that can be obtained for the device is already in the status map data . If it is not in the status map data, the particular infoType is added to the information to be extracted for the protocol. If it is in the status map data, the nRelativePriority is compared. If the priority in the status map data is higher or the same, the infoType is not to be obtained using the protocol. If the priority in the status map data is lower, the intoType is added to the information to be extracted and replaced in the status map data.

The CAbsProtocol class also has two other virtual functions, which are protocol-independent:
(1) void initWithVendor(std::map<std::string, std::vector<SParameter>> & inOut_ProtocolParameters, const std::string & in_sVendor); and
(2) void initWithModel(std::map<std::string, std::vector<SParameter>> & inOut_ProtocolParameters, const std::string & in_sModel)

Figure 24 illustrates the uniform class structure within the HTTP, SNMP, and FTP modules shown in Figure 23 and the corresponding relationship to the CAbsProtocol class. Note that "XXX" refers to a particular protocol (e.g., HTTP, SNMP, or FTP), and that the present invention is designed for an expansion of the number of protocols. This use of CAbsProtocol allows the CHWaccess class to handle the future protocol support without changing the main functions. When a new protocol is added to be supported, the new protocol should follow the structure of Figures 23 and 24. Then, the CHWaccess class only needs to create the added protocol object and put it in the vector of the CAbsProtocol object pointers.

### Monitoring Methods

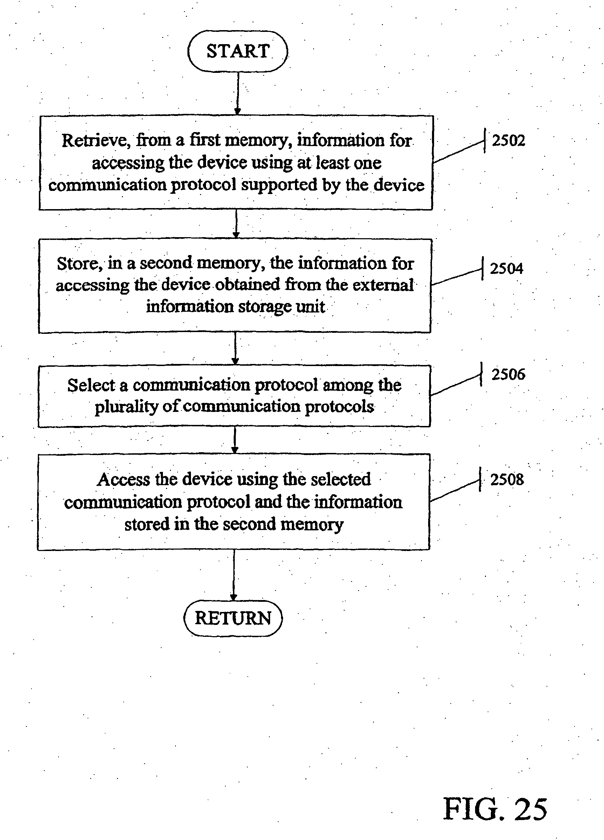

Figure 25 illustrates the steps in a method of storing information configured to be used for a plurality of communication protocols to access a monitored device among distinct devices communicatively coupled to a network.

In step 2502, a first memory is accessed to obtain information for accessing the device using at least one communication protocol supported by the device. In the preferred embodiment the first memory is the monitor database 1014, which contains the device information shown in Figure 19. For example, the first memory may be accessed to obtain (1) the IP address of a device, (2) a usemame and a password for accessing the device using FTP, or (3) a community name and a password for accessing the device using SNMP.

In step 2504, the information for accessing the device obtained from the first memory is stored in a second memory. In the preferred embodiment, the second memory comprises a vector of parameter name and parameter value pairs for each of the plurality of communication protocols. Moreover, in the preferred embodiment, the information for accessing the device is stored in a software object associated with the device. See Figure 13.

Next, in step 2506, a communication protocol (e.g., HTTP, SNMP, FTP, etc.) is selected among a plurality of communication protocols for accessing the device.

Finally, in step 2508, the device is accessed using the selected communication protocol and the information stored in the second memory. Figure 25 illustrates the steps in a method of storing information configured to be used for a plurality of communication protocols to access a monitored device among distinct devices communicatively coupled to a network.

Although the present invention is shown to include a few devices, which require monitoring, connected to a network, it will be appreciated that any number of devices may be connected to the network without deviating from the spirit and scope of the invention. Also, the present invention may also be applied in a home environment wherein various devices need to be monitored and controlled

The present invention enables the monitoring of the various devices in a multi-vendor environment and further facilitates retrieving and displaying detailed information in a user-comprehensible or user-friendly manner even without having specific private management information base (MIB) information.

The controller of the present invention may be conveniently implemented using a conventional general purpose digital computer or a microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product residing on a storage medium including instructions that can be used to program a computer to perform a process of the invention. The storage medium can include, but is not limited to, any type of disk including floppy disks, optical discs, CD-ROMs, and magneto-optical disks, ROMS, RAMs, EPROMs, EEPROMs, magnetic or optical cards, or any type of media suitable for storing electronic instructions.

Obviously, numerous modifications and variations of the present invention are possible in light of the above teachings. It is therefore to be understood that within the scope of the appended claims, the invention may be practiced otherwise than as specifically described herein.

## Claims

1. A method of monitoring the status of a device (24, 28, 32) among distinct devices communicatively coupled to a network using a monitoring device, comprising:
the monitoring device retrieving, from a first memory external to the monitoring device, information for accessing a device including information relating to at least one communication protocol supported by the device;
storing, in a second memory external to the monitoring device, the information for accessing the device retrieved from the first memory;
the monitoring device selecting a communication protocol among a plurality of communication protocols for accessing a monitored device;
the monitoring device accessing the monitored device using the selected communication protocol and the information retrieved from the first memory and stored in the second memory;
the monitoring device retrieving, from the second memory, information for extracting status information from the monitored device, said information necessary to extract said information being organised in the second memory by communication protocol.

2. A method of claim 1, wherein the selecting step comprises selecting a communication protocol among SNMP, HTTP, and FTP.

3. A method of claim 1, wherein the retrieving step comprises retrieving, from the first memory, at least one of a usemame and a password for accessing the monitored device using FTP.

4. A method of claim 1, wherein the retrieving step comprises retrieving, from the first memory, at least one of a community name and a password for accessing the monitored device using SNMP.

5. A method of claim 1, wherein the retrieving step comprises retrieving, from the first memory, an IP address of the monitored device.

6. A method of claim 1, wherein the second memory comprises a vector of parameter name and parameter value pairs for each of the plurality of communication protocols.

7. A method of claim 1, wherein the storing step further comprises storing the information for accessing the device in a device software object associated with the monitored device.

8. A method of claim 7, wherein the device software object is stored in a random-access memory unit of the monitoring device.

9. A method of claim 1, wherein the retrieving step comprises accessing the first memory using virtual functions associated with an abstract software class.

10. A method of claim 1, wherein the accessing step comprises transmitting to the monitored device, information stored in the second memory necessary to access the monitored device using the selected communication protocol.

11. A method of claim 11, wherein the accessing step comprises receiving, by the monitored device, the transmitted information; and processing, by the monitored device, the received information.

12. A system for monitoring the status of a device (24, 28, 32) among distinct devices communicatively coupled to a network, comprising a monitoring device including:
means for retrieving, from a first memory external to the monitored device, information for accessing a device including information relating to at least one communication protocol supported by the device;
means for selecting a communication protocol from a plurality of communication protocols for accessing a monitored device; and
means for accessing the monitored device using the selected communication protocol and the information retrieved from the first memory and stored in a second memory;
means for retrieving, from the second memory, information for extracting status information from the monitored device, said information necessary to extract said information being organised in the second memory by communication protocol.
the system further comprising:
means for storing, in a second memory external to the monitoring device, the information for accessing the device retrieved from the first memory;

13. A system of claim 12, wherein the means for selecting comprises means for selecting a communication protocol among SNMP, HTTP, and FTP.

14. A system of claim 12, wherein the means for retrieving comprises means for retrieving, from the first memory, at least one of a usemame and a password for accessing the monitored device using FTP.

15. A system of claim 12, wherein the means for retrieving comprises means for retrieving, from the first memory, at least one of a community name and a password for accessing the monitored device using SNMP.

16. A system of claim 12, wherein the means for retrieving comprises means for retrieving, from the first memory, an IP address of the device.

17. A system of claim 12, wherein the second memory comprises a vector of parameter name and parameter value pairs for each of the plurality of communication protocols.

18. A system of claim 12, wherein the means for storing further comprises means for storing the information for accessing the monitored device in a device software object associated with the monitored device.

19. A system of claim 18, wherein the device software object is stored in a random-access memory unit of the monitoring device.

20. A system of claim 12, wherein the means for retrieving comprises means for accessing the first memory using virtual functions associated with an abstract software class.

21. A system of claim 12, wherein the means for accessing comprises means for transmitting to the monitored device, information stored in the second memory necessary to access the device using the selected communication protocol.

22. A system of claim 21, wherein the means for accessing comprises means for receiving, by the device, the transmitted information; and means for processing, by the monitored device, the received information.

23. A carrier medium carrying computer readable code for controlling a computer to carry out the method of any one of claims 1 to 11.

## Patentansprüche

1. Verfahren zur Überwachung des Status einer Vorrichtung (24, 28, 32) unter verschiedenen Vorrichtungen, die mit einem Netz kommunikationstechnisch gekoppelt sind, unter Verwendung einer Überwachungsvorrichtung, umfassend:
durch die Überwachungsvorrichtung erfolgendes Abrufen von Information zum Zugreifen auf eine Vorrichtung, die Information bezüglich mindestens eines durch die Vorrichtung unterstützten Kommunikationsprotokolls aufweist, von einem ersten Speicher außerhalb der Überwachungsvorrichtung;
in einem zweiten Speicher außerhalb der Überwachungsvorrichtung erfolgendes Speichern der aus dem ersten Speicher abgerufenen Information zum Zugreifen auf die Vorrichtung;
durch die Überwachungsvorrichtung erfolgendes Auswählen eines Kommunikationsprotokolls unter der Vielzahl von Kommunikationsprotokollen zum Zugreifen auf eine überwachte Vorrichtung;
durch die Überwachungsvorrichtung erfolgendes Zugreifen auf die überwachte Vorrichtung unter Verwendung des ausgewählten Kommunikationsprotokolls und der aus dem ersten Speicher abgerufenen und in dem zweiten Speicher gespeicherten Information;
durch die Überwachungseinrichtung aus dem zweiten Speicher erfolgendes Abrufen von Information zum Extrahieren von Statusinformation von der überwachten Vorrichtung, wobei die Information, die notwendig ist, um die Information zu extrahieren, in dem zweiten Speicher durch ein Kommunikationsprotokoll organisiert wird.

2. Verfahren nach Anspruch 1, wobei der Auswahlschritt umfasst: Auswählen eines Kommunikationsprotokolls aus SNMP, HTTP und FTP.

3. Verfahren nach Anspruch 1, wobei der Abrufschritt umfasst: Abrufen zumindest eines von Folgendem aus dem ersten Speicher, nämlich einen Benutzernamen und ein Kennwort zum Zugreifen auf die überwachte Vorrichtung unter Verwendung des FTP.

4. Verfahren nach Anspruch 1, wobei der Abrufschritt umfasst: Abrufen zumindest eines von Folgendem aus dem ersten Speicher, nämlich eines Gemeinschaftsnamens und eines Kennwortes zum Zugreifen auf die überwachte Vorrichtung unter Verwendung des SNMP.

5. Verfahren nach Anspruch 1, wobei der Abrufschritt umfasst: Abrufen einer IP-Adresse der überwachten Vorrichtung aus dem ersten Speicher.

6. Verfahren nach Anspruch 1, wobei der zweite Speicher einen Vektor aus Paaren von Parameternamen und Parameterwerten für jedes der Vielzahl von Kommunikationsprotokollen umfasst.

7. Verfahren nach Anspruch 1, wobei der Speicherschritt ferner umfasst: Speichern der Information zum Zugreifen auf die Vorrichtung in einem Vorrichtungssoftware-Objekt, das der überwachten Vorrichtung zugeordnet ist.

8. Verfahren nach Anspruch 7, wobei das Vorrichtungssoftware-Objekt in einer Direktzugriffsspeichereinheit der Überwachungsvorrichtung gespeichert ist.

9. Verfahren nach Anspruch 1, wobei der Abrufschritt umfasst: Zugreifen auf den ersten Speicher unter Verwendung virtueller Funktionen, die einer abstrakten Softwareklasse zugeordnet sind.

10. Verfahren nach Anspruch 1, wobei der Zugriffsschritt umfasst: an die überwachte Vorrichtung erfolgendes Übertragen von in dem zweiten Speicher gespeicherter Information, die notwendig ist, um auf die überwachte Vorrichtung unter Verwendung des ausgewählten Kommunikationsprotokolls zuzugreifen.

11. Verfahren nach Anspruch 11, wobei der Zugriffsschritt umfasst: Empfangen der übertragenen Information durch die überwachte Vorrichtung; und Verarbeiten der empfangenen Information durch die überwachte Vorrichtung.

12. System zur Überwachung des Status einer Vorrichtung (24, 28, 32) unter verschiedenen Vorrichtungen, die mit einem Netz kommunikationstechnisch gekoppelt sind, umfassend eine Überwachungsvorrichtung, die aufweist:
ein Mittel zum Abrufen von Information zum Zugreifen auf eine Vorrichtung, die Information bezüglich mindestens eines durch die Vorrichtung unterstützten Kommunikationsprotokolls aufweist, von einem ersten Speicher außerhalb der Überwachungsvorrichtung;
ein Mittel zum Auswählen eines Kommunikationsprotokolls aus der Vielzahl von Kommunikationsprotokollen zum Zugreifen auf eine überwachte Vorrichtung; und
ein Mittel zum Zugreifen auf die überwachte Vorrichtung unter Verwendung des ausgewählten Kommunikationsprotokolls und der vom ersten Speicher abgerufenen und in einem zweiten Speicher gespeicherten Information;
ein Mittel zum Abrufen von Information zum Extrahieren von Statusinformation von der überwachten Vorrichtung aus dem zweiten Speicher, wobei die Information, die notwendig ist, um die Information zu extrahieren, in dem zweiten Speicher durch ein Kommunikationsprotokoll organisiert wird.
wobei das System ferner umfasst:
ein Mittel zum Speichern der Information zum Zugreifen auf die aus dem ersten Speicher abgerufenen Vorrichtung in einem zweiten Speicher außerhalb der Überwachungseinrichtung.

13. System nach Anspruch 12, wobei das Mittel zum Auswählen ein Mittel zum Auswählen eines Kommunikationsprotokolls aus SNMP, HTTP und FTP umfasst.

14. System nach Anspruch 12, wobei das Mittel zum Abrufen umfasst: ein Mittel Abrufen zumindest eines von Folgendem aus dem ersten Speicher, nämlich eines Benutzernamens und eines Kennwortes zum Zugreifen auf die überwachte Vorrichtung unter Verwendung des FTP.

15. System nach Anspruch 12, wobei das Mittel zum Abrufen umfasst: ein Mittel zum Abrufen zumindest eines von Folgendem aus dem ersten Speicher, nämlich eines Gemeinschaftsnamens und eines Kennwortes zum Zugreifen auf die überwachte Vorrichtung unter Verwendung des SNMP.

16. System nach Anspruch 12, wobei das Mittel zum Abrufen umfasst: ein Mittel zum Abrufen einer IP-Adresse der Vorrichtung aus dem ersten Speicher.

17. System nach Anspruch 12, wobei der zweite Speicher einen Vektor aus Paaren von Parametemamen und Parameterwerten für jedes aus der Vielzahl von Kommunikationsprotokollen umfasst.

18. System nach Anspruch 12, wobei das Mittel zum Speichern ferner umfasst: ein Mittel zum Speichern der Information zum Zugreifen auf die überwachte Vorrichtung in einem Vorrichtungssoftware-Objekt, das der überwachten Vorrichtung zugeordnet ist.

19. System nach Anspruch 18, wobei das Vorrichtungssoftware-Objekt in einer Direktzugriffsspeichereinheit der Überwachungsvorrichtung gespeichert ist.

20. System nach Anspruch 12, wobei das Mittel zum Abrufen umfasst: ein Mittel zum Zugreifen auf den ersten Speicher unter Verwendung virtueller Funktionen, die einer abstrakten Softwareklasse zugeordnet sind.

21. System nach Anspruch 12, wobei das Mittel zum Zugreifen umfasst: ein Mittel zum an die überwachte Vorrichtung erfolgendes Übertragen von in dem zweiten Speicher gespeicherter Information, die notwendig ist, um auf die Vorrichtung unter Verwendung des ausgewählten Kommunikationsprotokolls zuzugreifen.

22. System nach Anspruch 21, wobei das Mittel zum Zugreifen umfasst: ein Mittel zum Empfangen der übertragenen Information durch die Vorrichtung; und ein Mittel zur Verarbeitung der empfangenen Information durch die Vorrichtung.

23. Trägermedium, das computerlesbaren Code zur Steuerung eines Computers trägt, um das Verfahren nach einem der Ansprüche 1 bis 11 auszuführen.

## Revendications

1. Procédé de surveillance de l'état d'un dispositif (24, 28, 32) parmi des dispositifs distincts couplés en communication à un réseau, en utilisant un dispositif de surveillance, comprenant les étapes ci-dessous dans lesquelles ou consistant à :
le dispositif de surveillance récupère, à partir d'une première mémoire externe au dispositif de surveillance, des informations permettant d'accéder à un dispositif incluant des informations relatives à au moins un protocole de communication pris en charge par le dispositif ;
stocker, dans une seconde mémoire externe au dispositif de surveillance, les informations permettant d'accéder au dispositif, récupérées à partir de la première mémoire ;
le dispositif de surveillance sélectionne un protocole de communication, parmi une pluralité de protocoles de communication, en vue d'accéder à un dispositif surveillé ;
le dispositif de surveillance accède au dispositif surveillé en utilisant le protocole de communication sélectionné et les informations récupérées à partir de la première mémoire et stockées dans la seconde mémoire ;
le dispositif de surveillance récupère, à partir de la seconde mémoire, des informations permettant d'extraire des informations d'état du dispositif surveillé, lesdites informations nécessaires à l'extraction desdites informations étant organisées dans la seconde mémoire selon le protocole de communication.

2. Procédé selon la revendication 1, dans lequel l'étape de sélection consiste à sélectionner un protocole de communication parmi les protocoles SNMP, HTTP, et FTP.

3. Procédé selon la revendication 1, dans lequel l'étape de récupération consiste à récupérer, à partir de la première mémoire, au moins l'un parmi un nom d'utilisateur et un mot de passe permettant d'accéder au dispositif surveillé en utilisant le protocole FTP.

4. Procédé selon la revendication 1, dans lequel l'étape de récupération consiste à récupérer, à partir de la première mémoire, au moins l'un parmi un nom de communauté et un mot de passe permettant d'accéder au dispositif surveillé en utilisant le protocole SNMP.

5. Procédé selon la revendication 1, dans lequel l'étape de récupération consiste à récupérer, à partir de la première mémoire, une adresse IP du dispositif surveillé.

6. Procédé selon la revendication 1, dans lequel la seconde mémoire comprend un vecteur de paires de nom de paramètre et de valeur de paramètre pour chaque protocole de la pluralité de protocoles de communication.

7. Procédé selon la revendication 1, dans lequel l'étape de stockage consiste en outre à stocker les informations permettant d'accéder au dispositif dans un objet logiciel de dispositif associé au dispositif surveillé.

8. Procédé selon la revendication 7, dans lequel l'objet logiciel de dispositif est stocké dans une unité de mémoire vive du dispositif de surveillance.

9. Procédé selon la revendication 1, dans lequel l'étape de récupération consiste à accéder à la première mémoire en utilisant des fonctions virtuelles associées à une classe logicielle abstraite.

10. Procédé selon la revendication 1, dans lequel l'étape d'accès consiste à transmettre, au dispositif surveillé, des informations stockées dans la seconde mémoire, nécessaires en vue d'accéder au dispositif surveillé au moyen du protocole de communication sélectionné.

11. Procédé selon la revendication 11, dans lequel l'étape d'accès consiste à recevoir, par le biais du dispositif surveillé, les informations transmises ; et à traiter, par le biais du dispositif surveillé, les informations reçues.

12. Système destiné à surveiller l'état d'un dispositif (24, 28, 32) parmi des dispositifs distincts couplés en communication à un réseau, comportant un dispositif de surveillance incluant :
un moyen pour récupérer, à partir d'une première mémoire externe au dispositif surveillé, des informations permettant d'accéder à un dispositif incluant des informations relatives à au moins un protocole de communication pris en charge par le dispositif ;
un moyen pour sélectionner un protocole de communication parmi une pluralité de protocoles de communication pour accéder à un dispositif surveillé ; et
un moyen pour accéder au dispositif surveillé en utilisant le protocole de communication sélectionné et les informations récupérées à partir de la première mémoire et stockées dans une seconde mémoire ;
un moyen pour récupérer, à partir de la seconde mémoire, des informations permettant d'extraire des informations d'état du dispositif surveillé, lesdites informations nécessaires à l'extraction desdites informations étant organisées dans la seconde mémoire selon le protocole de communication ;
le système comprenant en outre :
un moyen pour stocker, dans une seconde mémoire externe au dispositif de surveillance, les informations d'accès au dispositif extraites de la première mémoire.

13. Système selon la revendication 12, dans lequel le moyen de sélection comporte un moyen pour sélectionner un protocole de communication parmi les protocoles SNMP, HTTP, et FTP.

14. Système selon la revendication 12, dans lequel le moyen de récupération comporte un moyen pour récupérer, à partir de la première mémoire, au moins l'un parmi un nom d'utilisateur et un mot de passe permettant d'accéder au dispositif surveillé en utilisant le protocole FTP.

15. Système selon la revendication 12, dans lequel le moyen de récupération comporte un moyen pour récupérer, à partir de la première mémoire, au moins l'un parmi un nom de communauté et un mot de passe permettant d'accéder au dispositif surveillé en utilisant le protocole SNMP.

16. Système selon la revendication 12, dans lequel le moyen de récupération comporte un moyen pour récupérer, à partir de la première mémoire, une adresse IP du dispositif.

17. Système selon la revendication 12, dans lequel la seconde mémoire comporte un vecteur de paires de nom de paramètre et de valeur de paramètre pour chaque protocole de la pluralité de protocoles de communication.

18. Système selon la revendication 12, dans lequel le moyen de stockage comporte en outre un moyen pour stocker les informations permettant d'accéder au dispositif surveillé dans un objet logiciel de dispositif associé au dispositif surveillé.

19. Système selon la revendication 18, dans lequel l'objet logiciel de dispositif est stocké dans une unité de mémoire vive du dispositif de surveillance.

20. Système selon la revendication 12, dans lequel le moyen de récupération comporte un moyen pour accéder à la première mémoire au moyen de fonctions virtuelles associées à une classe logicielle abstraite.

21. Système selon la revendication 12, dans lequel le moyen d'accès comporte un moyen pour transmettre, au dispositif surveillé, des informations stockées dans la seconde mémoire, nécessaires en vue d'accéder au dispositif au moyen du protocole de communication sélectionné.

22. Système selon la revendication 21, dans lequel le moyen d'accès comporte un moyen pour recevoir, par le biais du dispositif, les informations transmises ; et un moyen pour traiter, par le biais du dispositif surveillé, les informations reçues.

23. Support porteur portant un code lisible par ordinateur destiné à commander à un ordinateur de mettre en oeuvre le procédé selon l'une quelconque des revendications 1 à 11.
